# EUROPÄISCHE PATENTSCHRIFT

(11) **EP 3 259 117 B1**
(45) Veröffentlichungstag und Bekanntmachung des Hinweises auf die Patenterteilung: **26.09.2018**
(21) Anmeldenummer: 17710717.4
(22) Anmeldetag: 10.03.2017
(51) Int. Cl.: B29C 64/35, B29C 64/165, B08B 1/00, B33Y 30/00

(54) **3D-DRUCKER MIT BESCHICHTER UND BESCHICHTER-REINIGUNGSVORRICHTUNG**
3D PRINTER HAVING A COATER AND A COATER-CLEANING DEVICE
IMPRIMANTE 3D DOTÉE D'UN DISPOSITIF DE DÉPÔT ET DISPOSITIF DE NETTOYAGE DE DISPOSITIF DE DÉPÔT

(30) Priorität: 12.05.2016 DE 102016108833
(43) Veröffentlichungstag der Anmeldung: 27.12.2017
(73) Patentinhaber: ExOne GmbH, 86368 Gersthofen (DE)
(72) Erfinder: HÖCHSMANN, Rainer, 86863 Langanneufnach (DE); ORTMEIER, Helmut, 85748 Garching (DE); MÜLLER, Alexander, 86420 Diedorf-Vogelsang (DE); SÖHNEL, Peter, 86807 Buchloe (DE)
(74) Vertreter: Viering, Jentschura & Partner mbB Patent- und Rechtsanwälte
(86) Internationale Anmeldenummer: PCT/EP2017/055752
(87) Internationale Veröffentlichungsnummer: WO 2017/194224

(56) Entgegenhaltungen:
- CN-A- 104 742 374
- DE-A1-102009 056 687
- DE-A1-102012 022 859
- US-A1- 2005 252 536

## Beschreibung

Die vorliegende Erfindung betrifft einen 3D-Drucker mit einem Beschichter und einer Beschichter-Reinigungsvorrichtung sowie ein Verfahren zum Reinigen eines Beschichters von einem 3D-Drucker. Insbesondere betrifft die vorliegende Erfindung einen 3D-Drucker mit einem Beschichter und einer Beschichter-Reinigungsvorrichtung gemäß dem Oberbegriff von Anspruch 1. Ein solcher 3D-Drucker ist zum Beispiel aus der DE 10 2009 056 687 A1 bekannt.

Es sind verschiedene generative Fertigungsverfahren (und folglich verschiedene Arten von 3D-Druckern, also Maschinen/Anlagen zum schichtweisen Aufbau eines Bauteils) bekannt.

Einige generative Fertigungsverfahren haben die folgenden Schritte gemeinsam:
(1) Es wird zunächst Partikelmaterial vollflächig auf ein Baufeld aufgebracht, um eine Schicht aus nicht-verfestigtem Partikelmaterial zu bilden.
(2) Die aufgebrachte Schicht aus nicht-verfestigtem Partikelmaterial wird in einem vorbestimmten Teilbereich selektiv verfestigt, zum Beispiel durch selektives Aufdrucken von Behandlungsmittel, zum Beispiel Bindemittel, (alternativ zum Beispiel durch Lasersintern).
(3) Die Schritte (1) und (2) werden wiederholt, um ein gewünschtes Bauteil zu fertigen. Hierzu kann zum Beispiel eine Bauplattform, auf der das Bauteil schichtweise aufgebaut wird, jeweils um eine Schichtdicke abgesenkt werden, bevor eine neue Schicht vollflächig aufgetragen wird (alternativ können zum Beispiel der Beschichter und die Druckvorrichtung jeweils um eine Schichtdicke angehoben werden).
(4) Schließlich kann das gefertigte Bauteil, das von losem, nicht-verfestigtem Partikelmaterial gestützt und umgeben ist, entpackt werden.

Der Bauraum, in dem das oder die Bauteile gefertigt werden, kann zum Beispiel von einer sogenannten Baubox (auch "Jobbox" genannt) definiert sein. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden. Ein Beispiel für eine solche Baubox ist zum Beispiel in DE 10 2009 056 696 A1 beschrieben.

In dem obigen Schritt (1) kommt in der Regel ein Beschichter (auch "Recoater" genannt) zum Einsatz. Es sind unterschiedliche Beschichter zur Verwendung in einem 3D-Drucker bekannt, mit denen ein partikelförmiges Baumaterial in Form einer gleichmäßigen, vollflächigen Schicht auf das Baufeld (auch Baufläche oder Baubereich genannt) aufgebracht werden kann.

Eine Art von Beschichter verwendet eine Walze (kurz "Walzen-Beschichter"), vor der zunächst eine Menge an partikelförmigem Baumaterial abgelegt wird und die anschließend horizontal über das Baufeld hinweg verfahren wird, um das partikelförmige Baumaterial in Form einer gleichmäßigen Schicht auf das Baufeld aufzubringen. Die Walze kann dabei in Gegenlaufrichtung rotiert werden. Beschichteranordnungen mit großen Längen (und folglich groß-dimensionierte 3D-Drucker) sind mit einem Walzen-Beschichter schlecht/schwierig darzustellen, unter anderem wegen einer möglichen Durchbiegung der Walze.

Eine andere Art von Beschichter (sog. "Behälter-Beschichter", zum Beispiel "Schlitz-Beschichter") verwendet einen Behälter, der einen inneren Hohlraum zur Aufnahme von partikelförmigem Baumaterial definiert, und hat einen (zum Beispiel langgestreckten) Ausgabebereich, zum Beispiel aufweisend einen (langestreckten) Ausgabeschlitz, zum Ausgeben des partikelförmigen Baumaterials. Der Behälter-Beschichter kann zum Beispiel über ein Baufeld hinweg verfahrbar sein (zum Beispiel horizontal, zum Beispiel quer zur Längsrichtung), so dass das partikelförmige Baumaterial durch den (langgestreckten) Ausgabebereich auf das Baufeld ausgebbar ist, um dadurch eine gleichmäßige, vollflächige Baumaterial-Schicht auf das Baufeld aufzubringen. Der Beschichter kann langgestreckt sein, um zum Beispiel die Länge oder Breite eines rechteckigen Baufelds zu überspannen bzw. abzudecken. Beschichteranordnungen mit großen Längen (und folglich groß-dimensionierte 3D-Drucker) können mit einem Behälter-Beschichter gut realisiert werden.

In dem obigen Schritt (2) kann zum Beispiel eine Druckvorrichtung mit einem Druckkopf zum Einsatz kommen, der auf einen Teilbereich der zuvor aufgebrachten Baumaterial-Schicht gesteuert ein Behandlungsmittel aufbringt. Das Behandlungsmittel trägt zu einer (unmittelbaren und/oder späteren) Verfestigung der Baumaterial-Schicht in dem Teilbereich bei. Zum Beispiel kann das Behandlungsmittel ein Bindemittel sein/enthalten, zum Beispiel eine Bindemittel-Komponente eines Mehrkomponenten-Bindemittels.

Alternativ kann in dem obigen Schritt (2) zum Beispiel ein Laser eingesetzt werden, um einen Teilbereich der zuvor aufgebrachten Baumaterial-Schicht zu verfestigen, insbesondere durch Sintern oder Schmelzen des Baumaterials in dem Teilbereich.

Die vorliegende Erfindung betrifft einen 3D-Drucker mit einem Beschichter der oben beschriebenen, zweitgenannten Art, kurz einem "Behälter-Beschichter", insbesondere "Schlitz-Beschichter".

Ein solcher Beschichter kann zum Beispiel mit einem Streichelement versehen sein, von welchem auf das Baufeld aufgebrachtes Baumaterial überstrichen wird, um das Baumaterial zu verdichten und/oder zu nivellieren. Das Streichelement kann benachbart zu dem Ausgabeschlitz angeordnet sein und/oder diesen begrenzen, und kann zusammen mit dem Ausgabeschlitz den sogenannten Ausgabebereich des Beschichter-Behälters bilden.

Ein Beispiel für einen "Schlitz-Beschichter" ist aus der DE 10 2009 056 689 A1 bekannt. Siehe dort zum Beispiel die Figuren 17-20.

Ein weiteres Beispiel für einen "Schlitz-Beschichter" ist aus der WO 2016/030417 A1 und der WO 2016/030375 A2 bekannt, die jeweils einen sogenannten bidirektionalen Beschichter beschreiben. Siehe zum Beispiel die Figuren 2, 4, 5, 6, 7 der WO 2016/030417 A1.

Es ist zudem bekannt, einen 3D-Drucker mit einer Beschichter-Reinigungsvorrichtung auszustatten, mit welcher an der Unterseite des Behälters anhaftendes Baumaterial entfernt bzw. abgewischt werden kann und/oder mit welcher der Ausgabeschlitz des Behälters abgewischt werden kann, um ggf. Verstopfungen zu lösen. Siehe DE 10 2009 056 687 A1; dort zum Beispiel die Figuren 21, 24 und 25.

Die aus DE 10 2009 056 687 A1 bekannte Beschichter-Reinigungsvorrichtung weist ein langgetrecktes Wischelement auf, das unterhalb des Beschichter-Behälters zumindest teilweise in einem Baumaterial-Auffangbehälter aufgenommen ist. Das Wischelement ist drehbar abgestützt und mittels eines Wischelement-Antriebs drehbar antreibbar.

Es kann als eine Aufgabe der vorliegenden Erfindung angesehen werden, einen 3D-Drucker bzw. ein Beschichter-Reinigungsverfahren anzugeben, mit denen eine zufriedenstellende Qualität der zu fertigenden Bauteile konstant gewährleistet werden kann, zum Beispiel auch für groß-dimensionierte 3D-Drucker und/oder auch für einen im Automatikbetrieb betriebenen 3D-Drucker/Beschichter (wo viele Baujobs ohne Eingriff eines Bedienpersonals ausgeführt werden) und/oder für eine Vielzahl von eingesetzten Baumaterialmischungen und/oder Bindemittelsystemen.

Hierzu stellt die vorliegende Erfindung einen 3D-Drucker gemäß Anspruch 1 sowie ein Verfahren gemäß Anspruch 12 bereit. Weitere Ausgestaltungen des erfindungsgemäßen 3D-Druckers und des erfindungsgemäßen Verfahrens sind in den jeweiligen abhängigen Ansprüchen beschrieben.

Gemäß verschiedenen Aspekten der vorliegenden Erfindung kann ein 3D-Drucker mit einem Beschichter und einer solchen Beschichter-Reinigungsvorrichtung bereitgestellt sein, mit welcher ein verbessertes/gutes Reinigungsergebnis erzielbar ist und/oder welche einfach und/oder kostengünstig zu realisieren ist, insbesondere auch für lange Beschichter und/oder groß-dimensionierte 3D-Drucker, und/oder welche den Beschichter bzw. dessen Ausgabebereich zuverlässig, betriebssicher und effizient reinigt, zum Beispiel selbst dann, wenn Letzterer mit festen Anhaftungen/Ablagerungen verschmutzt ist, die zum Beispiel aus einer chemischen Reaktion resultieren können und/oder fest an dem Ausgabebereich anbacken.

Gemäß verschiedenen Aspekten der vorliegenden Erfindung ist ein 3D-Drucker mit einem Beschichter und einer Beschichter-Reinigungsvorrichtung bereitgestellt. Der Beschichter hat einen Behälter, der einen inneren Hohlraum zur Aufnahme von partikelförmigem Baumaterial definiert, und einen (zum Beispiel langgestreckten) Ausgabebereich zum Ausgeben des partikelförmigen Baumaterials und ist in eine Reinigungsposition verfahrbar, in der er über der Beschichter-Reinigungsvorrichtung (bzw. deren Wischelement) angeordnet ist. Die Beschichter-Reinigungsvorrichtung hat ein Wischelement zum Abwischen des Ausgabebereichs, das aus einem saugfähigen Material gebildet ist, das konfiguriert ist, um ein flüssiges Reinigungsmittel in sich aufzunehmen.

Hierdurch kann ein flüssiges Reinigungsmittel (zum Beispiel Lösemittel) in dem Wischelement aufgenommen und dort für ein späteres/darauffolgendes Abwischen des Ausgabebereichs gespeichert werden, zum Beispiel mit einer definierten bzw. eingestellten Menge, so dass der Ausgabebereich (zum Beispiel die Streichfläche eines Streichelements, das benachbart zu einem Ausgabeschlitz des Beschichters angeordnet ist) durch Abwischen mit einem mit Reinigungsmittel befeuchteten Wischelement gereinigt werden kann, wodurch selbst feste Anhaftungen/Ablagerungen effizient entfernt werden können.

Zum Beispiel beim Auftragen von feuchtem Pulvermaterial, zum Beispiel einem mit einer flüssigen Bindemittelkomponente (zum Beispiel einem flüssigen Aktivator) vorgemischten Sand, kann es zu Ablagerungen an dem Beschichter kommen. Beispielsweise können diese Ablagerungen an der sogenannten Abstreifklinge auftreten, d.h. an dem Streichelement. Solche Verunreinigungen können die Qualität des Beschichtungsvorgangs stören/negativ beeinflussen und bis zum Abbruch des Herstellungsprozesses führen. Die Verunreinigungen können mit der Beschichtungslänge und der Anzahl der Schichten zunehmen. Gerade bei großen 3D-Druckern und/oder im Automatikbetrieb, wo viele Baujobs ohne Eingriff eines Bedienpersonals wiederholt ausgeführt werden, kann dies zu Problemen und Einschränkungen in der Bauqualität bis hin zum Jobabbruch führen. Es sind heute diverse Reinigungseinheiten für Pulverauftragsvorrichtungen bekannt; siehe die eingangs diskutierten Druckschriften. Mit solchen Vorrichtungen können grobe Anhaftungen sicher entfernt werden; schwieriger gestaltet sich jedoch die Reinigung von festen bzw. "hartnäckigen" Anhaftungen, die sich im Laufe des Baujobs durch zum Beispiel chemische Reaktion bilden. Derartige Verunreinigungen können zum Beispiel zurückzuführen sein auf ein sogenanntes Ausdampfen oder Auskristallisierens des Aktivators in/an dem Beschichter, eine unbeabsichtigte Reaktion des Aktivators in/an dem Beschichter mit Dämpfen einer bereits aufgedruckten Bindemittelkomponente, ein Anhaften von aufgewirbelter, zuvor aufgedruckter Bindemittelkomponente samt Aktivator an dem Beschichter etc.

Feste bzw. "hartnäckige" Verunreinigungen können erfindungsgemäß mit einem geeigneten Lösungsmittel entfernt werden, das mittels des saugfähigen Wischelements zu dem zu reinigenden Ausgabebereich hin transportiert wird. Außerdem können die gelösten Verschmutzungen, also das Lösungsmittel und der darin gelöste Schmutz, zuverlässig in dem saugfähigen Wischelement aufgenommen werden, so dass der Schmutz zuverlässig abtransportiert werden kann.

Das Wischelement kann dabei zum Beispiel aus einem saugfähigen, porösen Schwamm oder einem saugfähigen Textilstoff, zum Beispiel einem saugfähigen Vlies oder einem saugfähigen Gewebe, gebildet sein. Der poröse Schwamm, insbesondere offenzelliger, poröser Schwamm, kann zum Beispiel aus einem Schwammgummi gebildet sein, zum Beispiel aus Naturkautschuk, und kann zum Beispiel ein Raumgewicht zwischen 160 bis 600 kg/m³ haben, zum Beispiel größer oder gleich 400 kg/m³. Das Wischelement kann zum Beispiel in Form eines sogenannten Pads bzw. Reinigungspads bereitgestellt sein. Das Wischelement kann zum Beispiel eine Mehrzahl von Schichten (z.B. zwei Schichten) aufweisen. Das Wischelement kann zum Beispiel eine erste Schicht (z.B. obere/oberste Schicht) zum Abwischen des Ausgabebereichs und eine mit der ersten Schicht verbundene (z.B. verklebte) zweite Schicht zum Abstützen der ersten Schicht aufweisen. Die erste Schicht kann zum Beispiel konfiguriert sein, um das flüssige Reinigungsmittel und die gelösten Verschmutzungen in sich aufzunehmen. Die zweite Schicht kann zum Beispiel konfiguriert sein, um keine Reinigungsflüssigkeit in sich aufzunehmen, und/oder um eine Anpresskraft zum Anpressen der ersten Schicht an den Ausgabebereich bereitzustellen. Die erste Schicht kann zum Beispiel offenporig/offenzellig sein. Die erste Schicht kann zum Beispiel aus einem der oben genannten Materialien gebildet sein. Die zweite Schicht kann zum Beispiel geschlossenporig/geschlossenzellig sein, z.B. derart, dass sie keine Flüssigkeit aufnimmt. Die zweite Schicht kann zum Beispiel aus einem elastischen Schaum gebildet sein. Die zweite Schicht kann zum Beispiel mit einer Trägerplatte verbunden (z.B. verklebt) sein. Die Trägerplatte kann zum Beispiel an einer/der (unten erläuterten) Trägerstruktur (z.B. lösbar) angebracht sein. Auch wenn sich in der Praxis der Einsatz einer Mehrschichtstruktur bewährt hat, kann die Erfindung ebenso gut mit einem einschichtigen Wischelement ausgeführt werden.

Der 3D-Drucker kann zum Beispiel eingerichtet sein, um das eingangs beschriebene generative Fertigungsverfahren auszuführen, zumindest die Schritte (1) bis (3).

Die Reinigungsposition, in die der Beschichter verfahrbar ist, bzw. die Beschichter-Reinigungsvorrichtung können zum Beispiel benachbart zu dem Baufeld angeordnet sein.

Die Beschichter-Reinigungsvorrichtung kann zum Beispiel stationär, d.h. ortsfest, ausgebildet sein.

Der 3D-Drucker kann zum Beispiel einen wie eingangs beschriebenen Bauraum aufweisen, in dem das oder die Bauteile gefertigt werden und der zum Beispiel von einer sogenannten Baubox (auch "Jobbox" genannt) definiert ist. Eine solche Baubox kann eine nach oben hin offene, sich in vertikaler Richtung erstreckende Umfangswandstruktur haben (zum Beispiel gebildet von vier vertikalen Seitenwänden), die zum Beispiel in der Draufsicht rechteckig ausgebildet sein kann. In der Baubox kann eine höhenverstellbare Bauplattform aufgenommen sein. Der Raum über der Bauplattform und zwischen der vertikalen Umfangswandstruktur kann dabei den Bauraum zum Beispiel zumindest mitausbilden. Ein oberer Bereich des Bauraums kann zum Beispiel als Baufeld bezeichnet werden.

Der 3D-Drucker kann zum Beispiel eine Druckvorrichtung mit einem Druckkopf aufweisen, der eingerichtet ist, um auf einen Teilbereich einer zuvor aufgebrachten Baumaterial-Schicht gesteuert ein Behandlungsmittel aufzubringen. Das Behandlungsmittel kann dabei zu einer (unmittelbaren und/oder späteren) Verfestigung der Baumaterial-Schicht in dem Teilbereich beitragen. Zum Beispiel kann das Behandlungsmittel ein Bindemittel sein/enthalten, zum Beispiel eine Bindemittel-Komponente eines Mehrkomponenten-Bindemittels,

Der Beschichter (oder "Recoater") ist als sogenannter "Behälter-Beschichter" ausgebildet, zum Beispiel als "Schlitz-Beschichter" (d.h., mit einem Ausgabeschlitz). Der Behälter-Beschichter kann zum Beispiel über ein Baufeld hinweg verfahrbar sein (zum Beispiel horizontal, zum Beispiel quer zu seiner Längsrichtung), so dass das partikelförmige Baumaterial durch den (zum Beispiel langgestreckten) Ausgabebereich auf das Baufeld ausgebbar ist, um dadurch eine gleichmäßige, vollflächige Baumaterial-Schicht auf das Baufeld aufzubringen. Der Beschichter kann langgestreckt sein, um zum Beispiel die Länge oder Breite eines rechteckigen Baufelds zu überspannen bzw. abzudecken.

Der Behälter kann zum Beispiel eine langgestreckte Form aufweisen, um zum Beispiel die gesamte Länge oder gesamte Breite eines rechteckigen Baufelds zu überspannen bzw. abzudecken. Der innere Hohlraum des Behälters kann zum Beispiel einen Schacht ausbilden, der im Querschnitt zum Beispiel (zumindest abschnittsweise) nach unten hin verjüngt ist und/oder eine Trichterform aufweist. Der innere Hohlraum zur Aufnahme von partikelförmigem Baumaterial kann zum Beispiel in dem (zum Beispiel langgestreckten) Ausgabebereich, insbesondere einem (zum Beispiel länglichen) Ausgabeschlitz, münden bzw. mit diesem in Verbindung stehen.

Der 3D-Drucker kann zum Beispiel eine stationäre Befüllungsstation aufweisen, in die der Beschichter verfahrbar ist, um den Behälter mit (frischem) Baumaterial zu befüllen.

Der Behälter kann zum Beispiel über einen mitfahrenden Vorlagebehälter mit Baumaterial versorgt werden.

In dem optionalen Vorlagebehälter und/oder dem Behälter kann zum Beispiel eine Verteilvorrichtung zum Verteilen des Baumaterials aufgenommen sein, zum Beispiel in Form einer Verteilerschnecke.

Gemäß verschiedenen Ausführungsformen kann das Wischelement zum Beispiel von einer Beschichter-Reinigungsposition, in der das Wischelement für ein Abwischen des Ausgabebereichs ausgerichtet ist, in eine Wischelement-Reinigungsposition, in der das Wischelement für eine Reinigung des Wischelements selbst ausgerichtet ist, und in die erstgenannte Position zurück bewegbar sein. Hierdurch kann eine Reinigung des Wischelements selbst ermöglicht werden, wodurch wiederum eine zuverlässige Reinigung des Beschichters ermöglicht wird. Zudem kann das Wischelement für ein anschließendes Reinigen des Beschichters mit Reinigungsmittel (zum Beispiel Lösemittel, zum Beispiel Lösemittel hinsichtlich eines verwendeten Bindemittelsystems zum selektiven Verfestigen des Partikelmaterials einer jeweiligen Schicht aus Partikelmaterial) infiltriert werden. Die Beschichter-Reinigungsposition kann zum Beispiel vertikal über der Wischelement-Reinigungsposition angeordnet sein. Das Wischelement kann zum Beispiel in der Beschichter-Reinigungsposition nach oben und in der Wischelement-Reinigungsposition nach unten ausgerichtet sein.

Gemäß verschiedenen Ausführungsformen kann die Beschichter-Reinigungsvorrichtung zum Beispiel eine Reinigungsstation aufweisen, die konfiguriert ist, um das Wischelement zu reinigen und mit flüssigem Reinigungsmittel zu infiltrieren, wenn sich das Wischelement in seiner Wischelement-Reinigungsposition befindet.

Gemäß verschiedenen Ausführungsformen kann die Reinigungsstation zum Beispiel ein Reinigungsbad aus dem flüssigen Reinigungsmittel aufweisen. Durch das Reinigungsbad kann eine zweckmäßige Menge an Reinigungsmittel zur Reinigung und Infiltration des Wischelements bereitgestellt werden. In einer möglichen Ausgestaltung kann das Wischelement zum Beispiel direkt durch das Reinigungsbad geführt werden bzw. zumindest teilweise (mit seiner Unterseite) in dieses eingetaucht werden, um hierdurch eine Reinigung und Infiltration des Wischelements zu erreichen. Über die Verweilzeit in dem Reinigungsbad kann hierbei zum Beispiel ein Ausmaß bzw. eine Menge an Reinigung und Infiltration (grob) eingestellt werden, was für eine Anzahl von Anwendungen ausreichend sein kann, um eine zufriedenstellende Qualität der zu fertigenden Bauteile konstant zu gewährleisten. Zusätzlich oder alternativ zu dem Reinigungsbad können zum Beispiel ein oder mehrere Düsen vorgesehen sein, die das Wischelement in seiner Reinigungsposition mit Reinigungsmittel "abspritzen", um dadurch eine Reinigung und Infiltration des Wischelements zu erreichen.

Die Reinigungsstation kann zum Beispiel einen Füllstandsensor aufweisen, mit dem ein Füllstand des Reinigungsbads ermittelbar ist, und/oder einen Sensor aufweisen, mit dem ein Verschmutzungsgrad des Reinigungsbads (mit darin gelöstem und/oder suspendiertem Schmutz, der von dem Wischelement in das Bad transferiert wurde) ermittelbar ist. Dadurch kann eine zweckmäßige Reinigung und Infiltration des Wischelements und somit letztendlich eine zweckmäßige Reinigung des Beschichters erreicht werden.

Gemäß verschiedenen Ausführungsformen kann die Reinigungsstation zum Beispiel ferner eine Wischelementreinigungs-und-Reinigungsmittelübertragungs-Vorrichtung aufweisen, die eingerichtet ist, um Reinigungsmittel von dem Reinigungsbad zu dem Wischelement zu transportieren und das Wischelement zu reinigen (zum Beispiel abzustreifen/abzuwischen), wenn sich das Wischelement in seiner Wischelement-Reinigungsposition befindet. Die Wischelementreinigungs-und-Reinigungsmittelübertragungs-Vorrichtung kann zum Beispiel eine drehbare Walze (zum Beispiel drehbar angetriebene Walze) mit einem saugfähigen Material (zum Beispiel Schwamm-Walze), das konfiguriert ist, um flüssiges Reinigungsmittel in sich aufzunehmen, aufweisen oder von dieser gebildet sein oder aus dieser bestehen. Hierdurch kann zum einen die Reinigungswirkung hinsichtlich des Wischelements verbessert werden und zum anderen die Menge an Reinigungsmittel, die in/von dem Wischelement aufgenommen wird, besser gesteuert werden, um einen reproduzierbaren Feuchtigkeitsgehalt in dem Wischelement zu gewährleisten und die Prozessstabilität zu erhöhen. Insofern hat sich gezeigt, dass bei verschiedenen Anwendungen, wenn das Wischelement zu feucht ist, das Risiko bestehen kann, dass Feuchtigkeit in den Ausgabeschlitz des Beschichters wandert und/oder auf dem Beschichter (zum Beispiel auf dem Streichelement/Abstreifelement bzw. der sog. "Klinge", zum Beispiel auf der Streichfläche des Ausgabereichs) verbleibt und das aufzutragende Partikelmaterial verklumpt, worunter letztendlich die Qualität des herzustellenden Bauteils leidet. Ist dagegen das Wischelement zu trocken, kann bei verschiedenen Anwendungen das Risiko bestehen, dass die Reinigungswirkung nicht ausreichend ist. Ferner kann es bei verschiedenen Anwendungen wichtig sein, dass das Wischelement dauerhaft sauber gehalten wird, um eine gleichbleibende Reinigungswirkung zu erzielen, um eine konstante Qualität des herzustellenden Bauteils sicherzustellen. Zum Beispiel kann die drehbare Walze gegenläufig zu der Bewegung des Wischelements gedreht werden, um das Wischelement zu reinigen. Die drehbare Walze kann zum Beispiel zwischen dem Reinigungsbad und dem Wischelement angeordnet sein (zum Beispiel in Vertikalrichtung), wenn sich Letzteres in seiner Reinigungsposition befindet, und kann zum Beispiel an einer unteren Seite davon in das Reinigungsbad eintauchen und an einer oberen Seite davon das Wischelement kontaktieren, um eine mechanische Reinigung bzw. ein Abstreifen des Wischelements zu erreichen und Schmutz von dem Wischelement zu der Walze und anschließend von der Walze an das Reinigungsbad zu transferieren.

Gemäß verschiedenen Ausführungsformen kann die Reinigungsstation zum Beispiel eine Reinigungsmittelmenge-Einstellvorrichtung aufweisen, die eingerichtet ist, um die Reinigungsmittelmenge, die durch die Wischelementreinigungs-und-Reinigungsmittelübertragungs-Vorrichtung von dem Reinigungsbad zu dem Wischelement transportiert wird, einzustellen, zum Beispiel zu begrenzen, zum Beispiel durch Herausdrücken von Flüssigkeit aus dem saugfähigen Material der drehbaren Walze. Hierdurch kann die Menge an Reinigungsmittel, die in/von dem Wischelement in seiner Reinigungsposition aufgenommen wird, noch besser gesteuert werden. Die Reinigungsmittelmenge-Einstellvorrichtung kann zum Beispiel eine weitere Walze aufweisen oder von dieser gebildet sein oder aus dieser bestehen. Die weitere Walze kann die drehbare Walze zum Beispiel kontaktieren, wobei ein Anpressdruck der weiteren Walze zum Beispiel variabel einstellbar ist, so dass zum Beispiel je nach Anwendung (zum Beispiel in Abhängigkeit des verwendeten Partikelmaterials und/oder Bindemittelsystems) ein geeigneter Anpressdruck einstellbar ist. Die weitere Walze kann zum Beispiel gegenläufig zu der drehbaren Walze drehbewegbar antreibbar sein.

Gemäß verschiedenen Ausführungsformen kann das Wischelement zum Beispiel ferner in eine Wischelement-Konditionierungsposition bewegbar sein, die sich zwischen der Beschichter-Reinigungsposition und der Wischelement-Reinigungsposition befindet und in der eine Reinigungsmittelmenge, die in dem Wischelement aufgenommen ist, (zum Beispiel final und/oder fein) einstellbar ist. Hierdurch kann die Restmenge an Reinigungsmittel, die in/von dem Wischelement aufgenommen ist, auf einen für die Reinigung des Beschichters zweckmäßigen Wert eingestellt werden, bevor das Wischelement (wieder) in seine Beschichter-Reinigungsposition verfahren wird. Somit kann eine zufriedenstellende Qualität des herzustellenden Bauteils sicher gewährleistet werden, da einerseits ein Verklumpen verhindert wird und andererseits eine zweckmäßige Reinigung sichergestellt werden kann.

Gemäß verschiedenen Ausführungsformen kann die Beschichter-Reinigungsvorrichtung zum Beispiel ferner eine Konditionierungsstation aufweisen, die eingerichtet ist, um die Reinigungsmittelmenge, die in dem Wischelement aufgenommen ist, einzustellen, wenn sich das Wischelement in seiner Wischelement-Konditionierungsposition befindet, zum Beispiel zu reduzieren, zum Beispiel durch Austreiben von Reinigungsmittel, das in dem Wischelement aufgenommen ist, aus dem Wischelement durch Mitführen/Abführen von Reinigungsmittel in einem Fluidstrom und/oder durch thermisches Austreiben von Reinigungsmittel und/oder durch mechanisches Austreiben von Reinigungsmittel.

Gemäß verschiedenen Ausführungsformen kann die Konditionierungsstation zum Beispiel eine Abstreif- und/oder Ausdrückvorrichtung aufweisen, an der das Wischelement abstreifbar und/oder an der Reinigungsmittel aus dem Wischelement herausdrückbar ist, um einen Teil des Reinigungsmittels, das in dem Wischelement aufgenommen ist, aus dem Wischelement abzuführen, wobei die Abstreif- und/oder Ausdrückvorrichtung zum Beispiel über dem Reinigungsbad angeordnet sein kann oder anderweitig mit diesem in Fluidverbindung stehen kann, so dass das aus dem Wischelement abgestreifte und/oder ausgedrückte Reinigungsmittel in das Reinigungsbad rückführbar ist, und/oder eine Walze aufweist, an der das Wischelement ausdrückbar ist. Zum Beispiel kann die Abstreif- und/oder Ausdrückvorrichtung eine Walze, zum Beispiel Abdruckwalze, aufweisen oder von dieser gebildet sein oder aus dieser bestehen. Alternativ oder zusätzlich kann zum Beispiel eine Abstreifklinge vorgesehen sein.

Gemäß verschiedenen Ausführungsformen kann die Konditionierungsstation zum Beispiel eine Fluidstrom-Zufuhrvorrichtung aufweisen, die eingerichtet ist, einen Fluidstrom (zum Beispiel Gasstrom, zum Beispiel Luftstrom) auf das Wischelement zu richten (bzw. letzteren mit einem Fluidstrom "anzublasen"), um mittels des Fluidstroms einen Teil des Reinigungsmittels, das in dem Wischelement aufgenommen ist, aus dem Wischelement abzuführen, wobei die Fluidstrom-Zufuhrvorrichtung zum Beispiel ferner eingerichtet sein kann, um eine Temperatur des Gasstroms einzustellen. Die Fluidstrom-Zufuhrvorrichtung kann zum Beispiel gemeinsam mit der Abstreif- und/oder Ausdrückvorrichtung vorgesehen sein, zum Beispiel in Bewegungsrichtung des Wischelements hinter der Abstreif- und/oder Ausdrückvorrichtung bzw. stromabwärts davon. Allerdings ist es auch möglich, nur eine von der Fluidstrom-Zufuhrvorrichtung und der Abstreif- und/oder Ausdrückvorrichtung vorzusehen. Mittels der Fluidstrom-Zufuhrvorrichtung kann in verschiedenen Anwendungen eine verbleibende Menge an Reinigungsmittel in dem Wischelement fein/genau/zweckmäßig eingestellt werden. Die Fluidstrom-Zufuhrvorrichtung kann zum Beispiel ein Gebläse und/oder einen Ventilator, eine optionale Fluid-Führungsstruktur (zum Beispiel in Form ein oder mehrerer Umlenkbleche etc.) sowie eine optionale Heizvorrichtung aufweisen.

Die Konditionierungsstation und die Reinigungsstation können zum Beispiel integral ausgebildet sein und/oder in einem gemeinsamen Gehäuse untergebracht sein.

Gemäß verschiedenen Ausführungsformen kann der 3D-Drucker zum Beispiel ferner eine Sensorvorrichtung aufweisen, mit der eine Menge an Reinigungsmittel, die in dem Wischelement aufgenommen ist, ermittelbar ist. Die Sensorvorrichtung kann zum Beispiel ein oder mehrere kapazitive Sensoren und/oder ein oder mehrere elektrolytische Sensoren und/oder ein oder mehrere resistive Sensoren aufweisen. Die Sensorvorrichtung kann zum Beispiel eingerichtet sein, die in dem Wischelement aufgenommene Menge an Reinigungsmittel zu ermitteln, wenn sich das Wischelement in einer oder mehreren oder jeder der folgenden Positionen befindet, die ausgewählt sind aus der Wischelement-Konditionierungsposition, zum Beispiel im Strömungspfad der Fluidstrom-Zufuhrvorrichtung, der Beschichter-Reinigungsposition und der Wischelement-Reinigungsposition. Dabei ist es auch denkbar, einen Sensor in dem Wischelement selbst anzubringen. Durch die Sensorvorrichtung kann zum Beispiel ermittelt werden, ob es zweckmäßig ist, eine (zum Beispiel erneute) Infiltration des Wischelements mit Reinigungsmittel durchzuführen, oder ob es zweckmäßig ist, (zum Beispiel weiteres) Reinigungsmittel aus dem Wischelement zu entfernen, oder ob es zweckmäßig ist, keine der beiden zuvor genannten Aktionen durchzuführen (zum Beispiel weil eine Ziel-Feuchtigkeit/Ziel-Reinigungsmittelmenge des Wischelements erreicht ist). Hierdurch kann die Menge an Reinigungsmittel, die in/von dem Wischelement aufgenommen ist, besonders genau auf einen für die Reinigung des Beschichters zweckmäßigen Wert eingestellt werden, bevor das Wischelement (wieder) in seine Beschichter-Reinigungsposition verfahren wird. Somit kann eine zufriedenstellende Qualität des herzustellenden Bauteils gewährleistet werden, da einerseits ein Verklumpen verhindert werden kann und andererseits eine zweckmäßige Reinigung sichergestellt werden kann.

Gemäß verschiedenen Ausführungsformen kann der 3D-Drucker zum Beispiel ferner eine Steuerung aufweisen, die mit der Sensorvorrichtung in Verbindung steht und eingerichtet sein kann, um auf Basis eines von der Sensorvorrichtung erhaltenen Werts, der repräsentativ ist für die Menge an Reinigungsmittel, die in dem Wischelement aufgenommen ist, ein Einstellen einer Restmenge an Reinigungsmittel in dem Wischelement zu veranlassen (zum Beispiel ein Trocknen des Wischelements auf eine Restfeuchte bzw. Restmenge an Reinigungsmittel), zum Beispiel mittels Ansteuerns der Konditionierungsstation, zum Beispiel der Fluidstrom-Zufuhrvorrichtung und/oder der Abstreif- und/oder Ausdrückvorrichtung derselben, und/oder Ansteuerns eines Antriebs für das Wischelement und/oder Ansteuerns der Reinigungsstation, wozu die Steuerung ferner mit der Konditionierungsstation, zum Beispiel der Fluidstrom-Zufuhrvorrichtung und/oder der Abstreif- und/oder Ausdrückvorrichtung derselben, und/oder dem Antrieb für das Wischelement und/oder mit der Reinigungsstation verbunden sein kann. Die Steuerung kann zum Beispiel eine Restmenge an Reinigungsmittel in dem Wischelement in Abhängigkeit von einem eingesetzten Baumaterial und/oder Bindersystem und/oder Reinigungsmittel und/oder der Art des saugfähigen Materials und/oder eines Reinigungsintervalls des Beschichters und/oder einem Verschmutzungsgrad des Beschichters einstellen, wozu in der Steuerung zum Beispiel entsprechende Kennfelder oder Tabellen hinterlegt sein können.

Mittels der Steuerung kann zum Beispiel ferner gesteuert werden, ob und/oder wann eine Reinigung des Beschichters erfolgen soll. Zum Beispiel kann vorgesehen sein, dass eine Reinigung nach einer gewissen Anzahl von auf das Baufeld aufgetragenen Partikelmaterialschichten erfolgt und/oder während dem selektiven Verfestigen einer zuvor aufgebrachten Schicht (zum Beispiel mittels einer Druckvorrichtung). Die Steuerung kann zum Beispiel den (gesamten) Reinigungsprozess softwaregesteuert durchführen. Gemäß verschiedenen Ausführungsformen kann der 3D-Drucker zum Beispiel einen Sensor ("Verschmutzungssensor") aufweisen, der eine Verschmutzung und/oder Verstopfung des Ausgabebereichs des Beschichters detektiert (zum Beispiel optisch), zum Beispiel einschließlich eines Grades der Verschmutzung und/oder Verstopfung. Die Steuerung kann in diesem Fall zum Beispiel eingerichtet sein, um basierend auf einem Signal des Sensors eine Reinigung des Beschichters zu veranlassen und/oder gemäß dem Grad der Verschmutzung ein entsprechendes Bewegungsmuster auszuwählen und auszuführen (siehe unten).

Gemäß verschiedenen Ausführungsformen kann zum Beispiel eine Steuerung/Steuereinheit vorgesehen sein (zum Beispiel die oben genannte Steuerung, die mit dem Sensor verbunden ist), die eingerichtet ist, um die Antriebsvorrichtung (zum Beispiel einen E-Motor derselben) gemäß unterschiedlichen Wischelement-Bewegungsmustern zu steuern. Mit anderen Worten können in der Steuerung unterschiedliche Bewegungsmuster hinterlegt sein. Ein erstes Bewegungsmuster kann zum Beispiel eine dauerhafte Bewegung des Wischelements in einer Richtung aufweisen/enthalten. Gemäß einem zweiten Bewegungsmuster kann das Wischelement zum Beispiel wechselweise/alternierend nach links und rechts bewegt werden. Ferner können sich zwei Bewegungsmuster zum Beispiel dadurch unterscheiden, dass das Wischelement mit unterschiedlichen Geschwindigkeiten bewegt wird. Durch das Vorsehen unterschiedlicher Bewegungsmuster ist es möglich, eine jeweils zweckmäßige Reinigung effizient auszuführen. Die Steuerung kann ein jeweiliges Bewegungsmuster zum Beispiel auswählen gemäß einem eingesetzten Baumaterial und/oder Bindersystem und/oder einem Grad der Verschmutzung und/oder einem eingesetzten Lösemittel und/oder einem Reinigungsintervall (d.h., einem zeitlichen Abstand zwischen zwei aufeinanderfolgenden Reinigungen).

Gemäß verschiedenen Ausführungsformen kann die Beschichter-Reinigungsvorrichtung zum Beispiel ferner eine Antriebsvorrichtung zum Bewegen des Wischelements aufweisen, die eingerichtet ist, um das Wischelement relativ zu dem Ausgabebereich für eine Reinigung desselben zu bewegen (zum Beispiel geradlinig/linear zu bewegen), wenn sich der Beschichter über der Beschichter-Reinigungsvorrichtung befindet, und/oder um das Wischelement zwischen der Beschichter-Reinigungsposition und der Wischelement-Reinigungsposition und optional der Wischelement-Konditionierungsposition zu bewegen.

Die Antriebsvorrichtung kann zum Beispiel einen Motor, zum Beispiel E-Motor, aufweisen, der zum Beispiel mit einer Steuerung in Verbindung steht, zum Beispiel der oben genannten Steuerung. Gemäß verschiedenen Ausführungsformen kann die Antriebsvorrichtung zum Beispiel eine (z.B. langgestreckte) Trägerstruktur, zum Beispiel in Form eines Bandes oder Riemens, aufweisen, die zum Beispiel von dem Motor antreibbar ist und an der das Wischelement angebracht ist. Die Antriebsvorrichtung kann zum Beispiel ferner zwei oder mehrere Umlenkmittel aufweisen (zum Beispiel in Form von (Riemen-)Scheiben und/oder Rollen), um die herum die (langgestreckte) Trägerstruktur gewunden/gelegt/geführt ist, so dass durch Antreiben mindestens eines der Umlenkmittel (zum Beispiel mittels eines Elektromotors) die Trägerstruktur und somit das Wischelement relativ zu dem Beschichter bewegbar ist. Zum Beispiel kann ein erster Abschnitt des Bandes oder des Riemens mit (geringem) Abstand zu dem Ausgabebereich im Wesentlichen in Längsrichtung desselben verlaufen und/oder vertikal unterhalb des Ausgabebereichs angeordnet sein und/oder geradlinig ausgebildet sein und/oder parallel zu dem Ausgabebereich verlaufen und/oder in Höhenrichtung zwischen dem Ausgabebereich und einem zweiten Abschnitt angeordnet sein, der zum Beispiel wiederum geradlinig ausgebildet sein kann und/oder parallel verlaufen kann zu dem Ausgabebereich und/oder dem ersten Bahnabschnitt.

Gemäß verschiedenen Ausführungsformen kann das Wischelement zum Beispiel lösbar an der Trägerstruktur angebracht sein, zum Beispiel mittels eines Schnellverschlusses. Hierdurch wird ermöglicht, dass in Abhängigkeit von zum Beispiel dem Lösemittel und/oder dem Bindersystem und/oder dem Partikelmaterial ein geeignetes Wischelement an der Trägerstruktur angebracht werden kann. Ferner wird ermöglicht, dass ein verschlissenes Wischelement schnell ausgetauscht/ausgewechselt werden kann, ohne dass ein Austausch/Auswechseln der Trägerstruktur erforderlich ist.

Gemäß verschiedenen Ausführungsformen kann die Antriebsvorrichtung zum Beispiel eingerichtet sein, um das Wischelement in eine abgesenkte Position zu bewegen, in der eine Kollision mit dem Beschichter vermieden wird, wobei sich das Wischelement zum Beispiel in der Wischelement-Reinigungsposition und/oder in der Wischelement-Konditionierungsposition in der abgesenkten Position befindet, wohingegen es in seiner Reinigungsposition zum Beispiel in einer erhabenen Position angeordnet ist. Mit anderen Worten kann das Wischelement in Höhenrichtung bewegbar ausgebildet sein, wobei es zum Beispiel in der Beschichter-Reinigungsposition höher angeordnet ist als in der abgesenkten Position. Hierdurch kann eine kompakte Ausgestaltung des 3D-Druckers ermöglicht werden, da die Beschichter-Reinigungsvorrichtung nahe an dem Baufeld angeordnet werden kann bzw. nahe an dieses herangerückt werden kann, ohne den Beschichter in seinem üblichen Betrieb (insb. während den Beschichtungs-Fahrten zwischen einer ersten und einer zweiten Reinigung) zu beeinträchtigen. Mit anderen Worten wird ermöglicht, dass der Beschichter ohne Kollision über die Reinigungsvorrichtung bewegt werden kann.

Gemäß verschiedenen Ausführungsformen kann die Antriebsvorrichtung zum Beispiel eingerichtet sein, um das Wischelement für eine Reinigung des Ausgabebereichs entlang desselben zu bewegen, wenn sich der Beschichter über der Beschichter-Reinigungsvorrichtung befindet bzw. sich das Wischelement in seiner Beschichter-Reinigungsposition befindet. Das heißt, das Wischelement kann mittels der Antriebsvorrichtung für eine Reinigung des Ausgabebereichs entlang desselben bewegbar sein (d.h., im Wesentlichen in Längsrichtung desselben und/oder im Wesentlichen der Länge (des Ausgabereichs) nach hin, zum Beispiel im Wesentlichen der gesamten Länge oder einem Teilstück davon nach hin, welches Teilstück zum Beispiel größer gleich der Hälfte der gesamten Länge ist, zum Beispiel größer gleich 3/4 der gesamten Länge, zum Beispiel größer gleich 4/5 der gesamten Länge, zum Beispiel größer gleich 5/6 der gesamten Länge), wenn sich der Beschichter über der Beschichter-Reinigungsvorrichtung befindet. Hierdurch wird der Ausgabebereich von dem Wischelement in Längsrichtung abgewischt, anders als im eingangs genannten Stand der Technik, wo der Ausgabebereich von einem rotierenden Wischelement in Querrichtung abgewischt wird. Gemäß verschiedenen Ausführungsformen kann durch ein Abwischen des Ausgabebereichs (zum Beispiel der mindestens einen Streichfläche) in Längsrichtung ein effektives und/oder effizientes Reinigen desselben erreicht werden, zum Beispiel mit einer gegenüber der eingangs genannten, herkömmlichen Reinigungsvorrichtung verbesserten Reinigungswirkung und/oder mit einem gegenüber der eingangs genannten, herkömmlichen Reinigungsvorrichtung reduzierten Widerstand, der von dem Antrieb zu überwinden ist. Gemäß verschiedenen Ausführungsformen kann durch ein Abwischen des Ausgabebereichs (zum Beispiel des Ausgabeschlitzes und/oder der mindestens einen Streichfläche) in Längsrichtung ein zweckmäßiges Reinigen desselben einfach und kostengünstig realisiert werden, zum Beispiel auch für lange Beschichter bzw. lange Ausgabebereiche. Insofern kann das für die herkömmliche Reinigungsvorrichtung benötigte, langgestreckte (zum Beispiel walzenförmige) Wischelement gemäß verschiedenen Aspekten der vorliegenden Erfindung eingespart werden bzw. die Länge des Wischelements kann reduziert werden, und der Antrieb des Wischelements kann schwächer ausgelegt werden, da der zu überwindende Widerstand reduziert werden kann. Die Antriebsvorrichtung kann zum Beispiel eingerichtet sein, um das Wischelement entlang dem Ausgabebereich linear/geradlinig zu bewegen. Mit anderen Worten kann das Wischelement den Ausgabebereich in einer Linearbewegung entlang dessen Längsrichtung abfahren/abwischen, um denselben zu reinigen.

Gemäß verschiedenen Ausführungsformen kann die Antriebsvorrichtung zum Beispiel eingerichtet sein, um das Wischelement entlang einer Umlaufbahn (zum Beispiel einer geschlossenen Bahn/Bahnkurve, zum Beispiel aufweisend zwei gerade Abschnitte und zwei gekrümmte, z.B. halbkreisförmige, Abschnitte) zu bewegen, die sich mit einem ersten Bahnabschnitt entlang des Ausgabebereichs erstreckt (d.h., im Wesentlichen in Längsrichtung desselben und/oder im Wesentlichen der Länge (des Ausgabereichs) nach hin, zum Beispiel im Wesentlichen der gesamten Länge oder einem wesentlichen Teilstück davon nach hin), wenn sich der Beschichter in der Beschichter-Reinigungsposition befindet. Das Wischelement führt gemäß dieser Ausführungsform also keine Eigendrehbewegung um eine körpereigene Drehachse aus, sondern umläuft einen externen Punkt. Der erste Bahnabschnitt kann zum Beispiel geradlinig ausgebildet sein und/oder parallel zu dem Ausgabebereich bzw. an/in demselben verlaufen. Das Bewegen des Wischelements entlang einer Umlaufbahn stellt eine Möglichkeit dar, um das Wischelement zwischenzeitlich in die oben beschriebene abgesenkte Position zu bewegen. Dabei kann die Umlaufbahn zum Beispiel einen zweiten Bahnabschnitt aufweisen, der vertikal unter dem ersten Bahnabschnitt sowie vertikal unter dem Ausgabebereich angeordnet ist, wobei der zweite Bahnabschnitt zum Beispiel ebenfalls geradlinig ausgebildet sein kann und/oder parallel zu dem ersten Bahnabschnitt verlaufen kann. Wenn sich das Wischelement an dem zweiten Bahnabschnitt befindet, kann es zum Beispiel nach unten ausgerichtet sein, d.h. von dem Ausgabebereich abgewandt sein, wohingegen es nach oben ausgerichtet ist, wenn es sich an dem ersten Bahnabschnitt befindet.

Gemäß verschiedenen Ausführungsformen kann der Ausgabebereich zum Beispiel einen langgestreckten Ausgabeschlitz und/oder mindestens eine (zum Beispiel ein oder zwei) langgestreckte Streichfläche (zum Beispiel gebildet von einem Streichelement oder einer Streichklinge) aufweisen, die eingerichtet ist, um aus dem Behälter ausgegebenes Baumaterial zu überstreichen, um dadurch das ausgegebene Baumaterial zu nivellieren und/oder zu verdichten, wobei zum Beispiel die mindestens eine langgestreckte Streichfläche von dem Wischelement abwischbar ist. Zum Beispiel können in Querrichtung insgesamt zwei Streichflächen auf jeweils unterschiedlichen Seiten des Ausgabeschlitzes vorgesehen sein. Das Wischelement kann zum Beispiel eine Erstreckung in einer quer zur Längsrichtung des Ausgabeschlitzes/der Streichfläche verlaufenden Breitenrichtung haben, die größer oder gleich der von der langgestreckten Streichfläche ist, zum Beispiel größer oder gleich der von dem Ausgabebereich. Die mindestens eine Streichfläche kann zum Beispiel von einem Streichelement, welches zum Beispiel in Form einer sogenannten Streichleiste und/oder Streichklinge vorgesehen sein kann, bereitgestellt sein, zum Beispiel von einem nach unten ausgerichteten Abschnitt des Streichelements, der zum Beispiel nach unten hin vorspringen/vorstehen kann, zum Beispiel stufenförmig. Zum Beispiel kann die (jeweilige) Streichfläche planar und/oder streifenförmig ausgebildet sein. Die ein oder mehreren Streichflächen bzw. Streichelemente können zum Beispiel benachbart zu dem Ausgabeschlitz angeordnet sein und/oder diesen begrenzen, zum Beispiel jeweils in Querrichtung. Zum Beispiel kann der Ausgabeschlitz in Querrichtung zwischen zwei Streichflächen bzw. Streichelementen angeordnet sein. Der Beschichter kann dadurch als bidirektionaler Beschichter ausgebildet bzw. betrieben werden, wobei jeweils die in Fahrtrichtung hinten liegende Streichfläche aktiv ist. Zum Beispiel kann dabei zumindest die jeweils aktive Streichfläche (zum Beispiel der gesamte Beschichter) gekippt werden, um einen sogenannten Anstellwinkel der Streichfläche bezüglich des Baufelds und dadurch einen Verdichtungsgrad des Partikelmaterials einzustellen. Die ein oder mehreren Streichelemente können zum Beispiel an einer Trägerstruktur des Beschichters befestigt und/oder an dieser aufgehängt sein, zum Beispiel gemeinsam mit einer optionalen Schließvorrichtung zum selektiven Schließen des Ausgabeschlitzes. Die besagte Trägerstruktur kann sich zum Beispiel quer zur Bewegungsrichtung des Beschichters und/oder in Längsrichtung des Beschichters erstrecken. An der Trägerstruktur kann auch der Behälter befestigt sein, zum Beispiel separat von dem mindestens einen Streichelement und/oder der optionalen Schließvorrichtung.

Zum Beispiel können der (langgestreckte) Ausgabebereich und/oder der (längliche) Ausgabeschlitz und/oder die ein oder mehreren (langgestreckten) Streichflächen nach unten ausgerichtet sein, zum Beispiel zu dem Baufeld hin. Der (langgestreckte) Ausgabebereich und/oder der (längliche) Ausgabeschlitz und/oder die ein oder mehreren (langgestreckten) (effektiven) Streichflächen können eine erste Erstreckung in Längsrichtung und eine zweite Erstreckung in Querrichtung haben, wobei die erste Erstreckung größer ist als die zweite Erstreckung, zum Beispiel mindestens um den Faktor 2, 3, 4, 5, 6, 7, 8, 9, 10, 11, 12, 13, 14, 15, 16, 17, 18, 19, 20 oder größer. Zum Beispiel können der (langgestreckte) Ausgabebereich und/oder der (längliche) Ausgabeschlitz und/oder die jeweilige Streichfläche in der Draufsicht im Wesentlichen eine rechteckige Form und/oder Streifenform aufweisen.

Gemäß verschiedenen Ausführungsformen kann die Beschichter-Reinigungsvorrichtung zum Beispiel eine Mehrzahl von Wischelementen aufweisen, welche zum Beispiel gemeinsam in eine jeweils abgesenkte Position bewegbar sind, um eine Kollision mit dem Beschichter zu vermeiden. Hierdurch kann eine effiziente Reinigung ermöglicht werden.

Gemäß verschiedenen Ausführungsformen kann der 3D-Drucker zum Beispiel ferner einen Sensor (zum Beispiel Positionssensor), der eingerichtet ist, um eine Position des Wischelements zu detektieren, und/oder einen Sensor aufweisen, der eingerichtet ist, um einen Füllstand des Reinigungsbad zu detektieren. Zum Beispiel kann hinsichtlich des erstgenannten Sensors ein vom Sensor zu erfassendes Zielobjekt/Target an dem Wischelement selbst angebracht und/oder von diesem ausgebildet werden/sein und/oder an der obigen Trägerstruktur angebracht und/oder von dieser ausgebildet werden/sein. Ein jeweiliger Sensor kann zum Beispiel mit einer Steuerung verbunden sein, zum Beispiel mit der obigen Steuerung. Die Steuerung kann zum Beispiel eingerichtet sein, um gemäß einem von dem Positionssensor empfangenen Positionssignal die Antriebsvorrichtung (zum Beispiel einen E-Motor derselben) anzusteuern. Hierdurch kann zum Beispiel sichergestellt werden, dass eine Reinigung zuverlässig und wie gewünscht abläuft und/oder dass das Wischelement nach der Reinigung in der oben beschriebenen abgesenkten Position angeordnet ist/wird.

Gemäß verschiedenen Ausführungsformen kann der 3D-Drucker zum Beispiel ferner eine Druckvorrichtung mit einem Druckkopf aufweisen. Alternativ oder zusätzlich kann der 3D-Drucker zum Beispiel eine Laservorrichtung aufweisen.

Gemäß verschiedenen Aspekten der vorliegenden Erfindung ist ein Verfahren zum Reinigen eines Beschichters von einem 3D-Drucker bereitgestellt, wobei der Beschichter einen Behälter aufweist, der einen inneren Hohlraum zur Aufnahme von partikelförmigem Baumaterial definiert, und einen Ausgabebereich zum Ausgeben des partikelförmigen Baumaterials hat, und wobei das Verfahren aufweist:
Verfahren des Beschichters in eine Reinigungsposition, in der der Beschichter (zum Beispiel vertikal) über einer Beschichter-Reinigungsvorrichtung angeordnet ist, die ein Wischelement aufweist, das aus einem saugfähigen Material gebildet ist, das konfiguriert ist, um ein flüssiges Reinigungsmittel in sich aufzunehmen, und
Abwischen des Ausgabebereichs mit dem Wischelement in einem Zustand, in dem das Wischelement mit flüssigem Reinigungsmittel befeuchtet (zum Beispiel infiltriert und/oder getränkt) ist.

Das oben für den 3D-Drucker gesagte gilt analog für das Verfahren zum Reinigen eines Beschichters von einem 3D-Drucker.

Gemäß verschiedenen Ausführungsformen kann das Verfahren zum Reinigen eines Beschichters von einem 3D-Drucker zum Beispiel ferner aufweisen:
Bewegen des Wischelements zu einer Reinigungsstation und Reinigen des Wischelements und/oder Infiltrieren des Wischelements mit Reinigungsmittel in der Reinigungsstation und/oder
Bewegen des Wischelements zu einer Konditionierungsstation und Einstellen einer Reinigungsmittelmenge, die in dem Wischelement aufgenommen ist, in der Konditionierungsstation, zum Beispiel nach dem Bewegen des Wischelements zu der Reinigungsstation und/oder vor dem Abwischen des Ausgabebereichs mit dem Wischelement, zum Beispiel in Abhängigkeit von einem eingesetzten Baumaterial und/oder Bindersystem und/oder Reinigungsmittel, zum Beispiel um die Reinigungsmittelmenge zu reduzieren, zum Beispiel durch Austreiben von Reinigungsmittel aus dem Wischelement durch Mitführen/Abführen von Reinigungsmittel in einem Fluidstrom und/oder durch thermisches Austreiben von Reinigungsmittel und/oder durch mechanisches Austreiben von Reinigungsmittel, und/oder
Ermitteln einer Menge an Reinigungsmittel, die in dem Wischelement aufgenommen ist, zum Beispiel unter Verwendung eines Sensors, zum Beispiel nach dem Bewegen des Wischelements zu der Reinigungsstation und/oder vor dem Abwischen des Ausgabebereichs mit dem Wischelement, und/oder
Bewegen des Wischelements in eine abgesenkte Position, um eine Kollision mit dem Beschichter zu vermeiden, nach dem Abwischen des Ausgabebereichs mit dem Wischelement, und/oder
Austauschen des Wischelements durch ein anderes Wischelement, nachdem das Wischelement verschlissen ist oder in Anpassung an ein eingesetztes Baumaterial und/oder Bindersystem und/oder Reinigungsmittel.

Gemäß verschiedenen Ausführungsformen kann bei dem Verfahren zum Reinigen eines Beschichters von einem 3D-Drucker zum Beispiel
der Ausgabebereich eine langgestreckte Form haben und das Abwischen des Ausgabebereichs mit dem Wischelement im Wesentlichen in Längsrichtung des Ausgabebereichs erfolgen und/oder
das Bewegen des Wischelements auf einer geschlossenen Bahnkurve erfolgen und/oder
das Verfahren zum Reinigen des Beschichters softwaregesteuert ablaufen (zum Beispiel das gesamte Verfahren mit Ausnahme eines möglichen Austauschens des Wischelements).

Im Übrigen gilt das oben für den 3D-Drucker Gesagte analog für das Verfahren.

Des Weiteren gilt sowohl für das Verfahren als auch für den bzw. die 3D-Drucker das Folgende:
Unter partikelförmigem Baumaterial kann im Sinne dieser Anmeldung ein Baumaterial verstanden werden, welches zumindest einen Typ von Partikelmaterial (zum Beispiel Sand(körner), zum Beispiel Gießereisand, und/oder Metallpartikel und/oder Kunststoffpartikel) aufweist. Es kann auch unterschiedliches Partikelmaterial in dem Baumaterial enthalten sein, zum Beispiel ein Gemisch aus neuem Sand und recyceltem Sand oder ein Gemisch aus feinem Sand und grobem Sand oder ein Gemisch aus zwei unterschiedlichen Sandtypen. Das Baumaterial kann ferner zumindest eine flüssige Komponente aufweisen, zum Beispiel eine Bindemittel-Komponente, zum Beispiel einen Aktivator, und/oder einen oder mehrere feste und/oder flüssige Zuschlagstoffe. In dem Fall, dass das Baumaterial eine Bindemittel-Komponente enthält, kann zum Beispiel eine weitere Bindemittel-Komponente, zum Beispiel Furanharz, mittels einer Druckvorrichtung selektiv auf eine zuvor aufgebrachte Baumaterial-Schicht aufgedruckt werden, um diese in einem vorbestimmten Bereich zu verfestigen. Je nach herzustellendem Bauteil, zum Beispiel eine Gussform oder ein Gießkern, kann eine speziell dafür zubereitete Baumaterial-Zusammensetzung eingesetzt werden. Die Baumaterial-Zusammensetzung kann dabei definiert werden durch die Anzahl an eingesetzten Komponenten sowie die jeweilige Art und den jeweiligen Anteil der in dem Baumaterial(gemisch) enthaltenen Komponenten. Das Riesel- bzw. Fließverhalten des Baumaterials sowie die Reaktivität bzw. Gefahr chemisch bedingter Anhaftungen an dem Beschichter können dabei je nach Baumaterial-Zusammensetzung stark variieren. Entsprechend können auch das zeitliche Auftreten und/oder das Ausmaß der Verschmutzung gemäß der eingesetzten Baumaterial-Zusammensetzung und somit eine erforderliche Reinigung variieren.

Gemäß verschiedenen Ausführungsformen kann der Beschichter zum Beispiel mit einer Vibrationsvorrichtung versehen sein, mit welcher das in dem inneren Hohlraum aufgenommene Partikelmaterial in Vibration versetzbar ist, um das Fließ- bzw. Rieselverhalten des partikelförmigen Baumaterials bzw. den Austrag des partikelförmigen Baumaterials aus dem Ausgabebereich zu beeinflussen, insbesondere zu fördern. Eine solche Vibrationsvorrichtung kann zum Beispiel von einer Rüttelvorrichtung gebildet sein, mit der zumindest ein Wandabschnitt des Behälters in Vibration versetzt bzw. mit einer Rüttelbewegung beaufschlagt werden kann, um den Austrag des partikelförmigen Baumaterials zu beeinflussen. Gemäß verschiedenen Ausführungsformen kann daher auch ein partikelförmiges Baumaterial, das ein schlechtes Riesel- bzw. Fließverhalten hat, unter Verwendung einer Vibrationsvorrichtung in eine zweckmäßige Vibration versetzt werden, und/oder kann ein Wandabschnitt eines das Baumaterial aufnehmenden Behälters unter Verwendung einer Rüttelvorrichtung mit einer zweckmäßigen Rüttelbewegung beaufschlagt werden.

Gemäß verschiedenen Ausführungsformen kann der Beschichter zum Beispiel mit einer Labyrinth-Struktur im Innern des Behälters, welche ein Ausfließen/Austreten des Baumaterials im Stillstand des Beschichters verhindern kann, und/oder mit einer Schließvorrichtung versehen sein, die ein selektives Verschießen des Ausgabebereichs (zum Beispiel des Ausgabeschlitzes) ermöglicht und zum Beispiel ein an dem Beschichter angebrachtes Schließelement aufweist.

Beispielgebende, aber nicht einschränkende Ausführungsformen der vorliegenden Erfindung sind in den Figuren dargestellt und werden im Folgenden näher erläutert.

Es zeigen:
Figuren 1 und 2 Seitenansichten eines Beschichters und einer Beschichter-Reinigungsvorrichtung von einem 3D-Drucker gemäß einer Ausführungsform der vorliegenden Erfindung, wobei in Figur 1 Teile der Beschichter-Reinigungsvorrichtung weggelassen sind.
Figur 3 eine Querschnittansicht des Beschichters und der Beschichter-Reinigungsvorrichtung gemäß der Ausführungsform, die in den Figuren 1 und 2 gezeigt ist, wobei das Wischelement in seiner Beschichter-Reinigungsposition angeordnet ist.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung können Begriffe wie "verbunden", "angeschlossen" sowie "gekoppelt" verwendet werden zum Beschreiben sowohl einer direkten als auch einer indirekten Verbindung, eines direkten oder indirekten Anschlusses sowie einer direkten oder indirekten Kopplung.

In den Figuren werden identische oder ähnliche Elemente mit identischen Bezugszeichen versehen, soweit dies zweckmäßig ist.

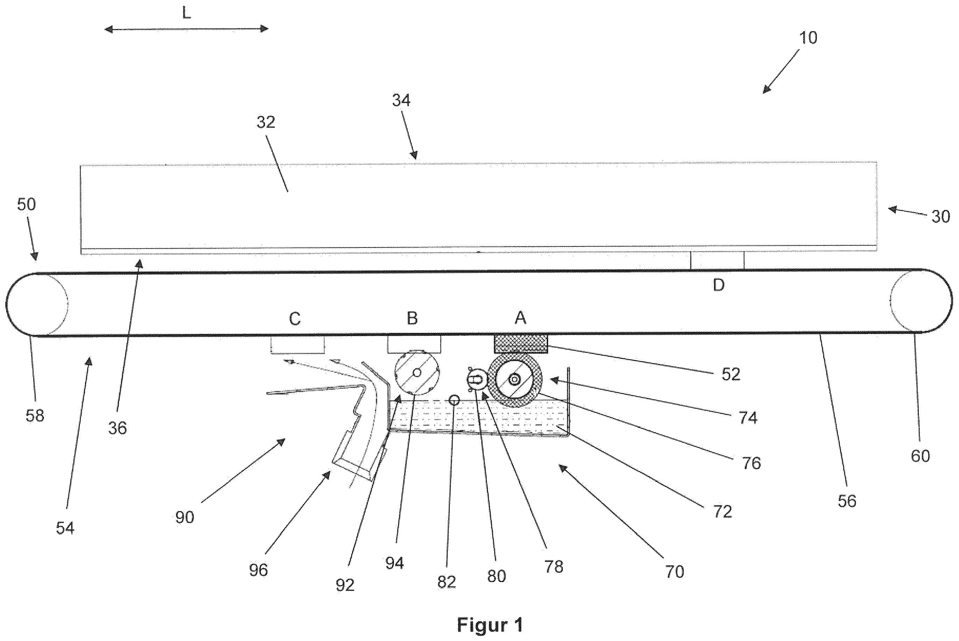

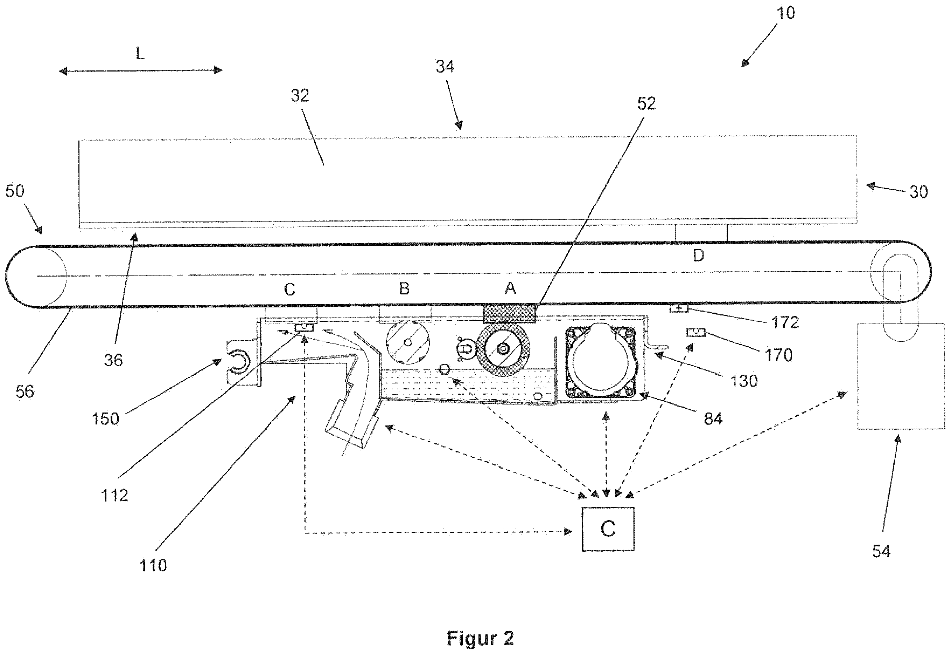

Die **Figuren 1** **und** **2** zeigen eine vereinfacht dargestellte Seitenansicht eines Beschichters 30, der für eine Reinigung seines Ausgabebereichs 36 in eine Reinigungsposition verfahren ist, in welcher er vertikal über einer Beschichter-Reinigungsvorrichtung 50 angeordnet ist, wobei in Figur 1 Teile der Beschichter-Reinigungsvorrichtung 50 aus Gründen der Übersichtlichkeit weggelassen sind (wie zum Beispiel der E-Motor der Antriebsvorrichtung, verschiedene Sensoren und die Steuerung, welche allesamt in Figur 2 gezeigt sind). Der Beschichter 30 und die Beschichter-Reinigungsvorrichtung 50 sind Bestandteile eines 3D-Druckers 10, und die Reinigungsposition kann sich zum Beispiel nahe einem nicht gezeigten Baufeld des 3D-Druckers 10 befinden.

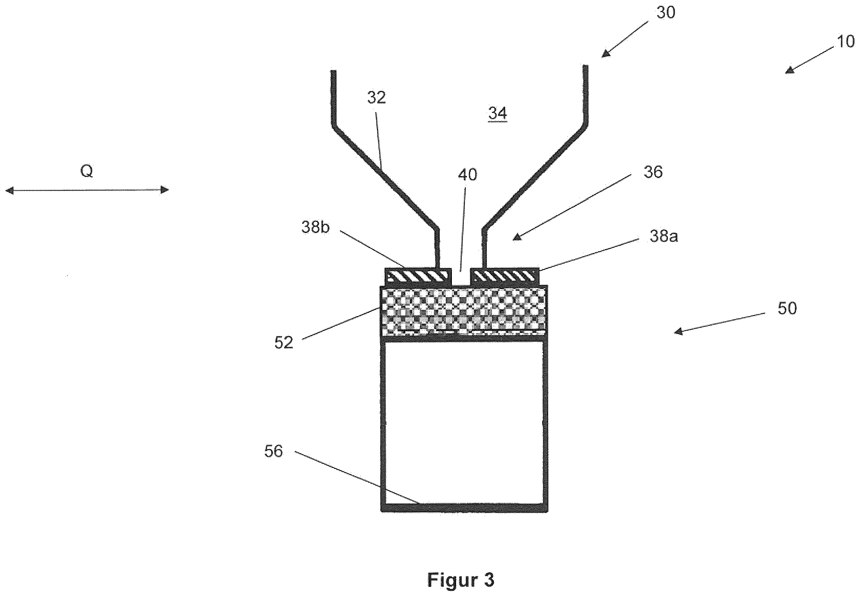

Wie hier gezeigt, weist der Beschichter 30 einen Behälter 32 auf, der einen inneren Hohlraum 34 zur Aufnahme von partikelförmigem Baumaterial definiert. Siehe auch Figur 3. Ferner hat der hier gezeigte Beschichter 30 einen Ausgabebereich 36 zum Ausgeben des partikelförmigen Baumaterials auf ein Baufeld hin. Der Ausgabebereich 36 kann zum Beispiel langgestreckt sein.

Der hier gezeigte Beschichter 30 und der hier gezeigte Behälter 32 können jeweils zum Beispiel eine langgestreckte Form haben, d.h. eine Erstreckung in Längsrichtung L haben, die größer ist als eine Erstreckung in Querrichtung Q (siehe auch Figur 3). Gleiches gilt für den Ausgabebereich 36, der ebenfalls zum Beispiel eine Erstreckung in Längsrichtung L haben kann, die größer ist als seine Erstreckung in Querrichtung Q. Zum Beispiel kann sich der Ausgabebereich 36 in Figur 1 und 2 im Wesentlichen über die gesamte Länge des Behälters 32 hinweg erstrecken.

Die hier gezeigte Beschichter-Reinigungsvorrichtung 50 weist ein Wischelement 52 auf. Die Beschichter-Reinigungsvorrichtung 50 kann zum Beispiel eine optionale Antriebsvorrichtung 54 zum Bewegen des Wischelements 52 aufweisen (zum Beispiel mit einem E-Motor). Das Wischelement kann zum Beispiel an einer Trägerstruktur 56 der Antriebsvorrichtung 54 befestigt sein, zum Beispiel lösbar. Die Trägerstruktur 56 kann zum Beispiel in Form eines endlosen Riemens ausgebildet sein. Das Wischelement 52 ist aus einem saugfähigen Material hergestellt, das konfiguriert ist, um ein flüssiges Reinigungsmittel in sich aufzunehmen. Hier ist beispielgebend ein Wischelement 52 gezeigt, das als quaderförmiger, saugfähiger, poröser Schwamm ausgebildet ist (siehe auch Figur 3). Die Form und das Material des Wischelements sind jedoch nicht darauf beschränkt. Das Wischelement kann zum Beispiel die Form einer Walze oder eines Prismas haben. Ferner kann das Wischelement zum Beispiel ein saugfähiges Vlies sein. Die Beschichter-Reinigungsvorrichtung 50 kann zum Beispiel auch mehrere solcher Wischelemente 52 aufweisen, die zum Beispiel entlang eines Abschnitts der Trägerstruktur in regelmäßigen Abständen an der Trägerstruktur 56 befestigt/angeordnet sind. Das Wischelement 52 kann zum Beispiel mittels eines Schnellverschlusses (nicht gezeigt) an der Trägerstruktur 56 befestigt sein.

Dadurch, dass das Wischelement 52 aus einem saugfähigen Material gebildet ist, das geeignet ist ein flüssiges Reinigungsmittel in sich aufzunehmen, kann der Ausgabebereich 36 des Beschichters 30 effektiv und effizient gereinigt werden, insbesondere unter Verwendung des zuvor aufgenommenen Reinigungsmittels.

Die Antriebsvorrichtung 54 kann zum Beispiel eingerichtet sein, um das Wischelement 52 für eine Reinigung des Ausgabebereichs 36 entlang einer Umlaufbahn zu bewegen, die sich mit einem ersten Bahnabschnitt entlang des Ausgabebereichs 36 erstreckt, wenn sich der Beschichter 30 in der Beschichter-Reinigungsposition befindet, so dass das Abwischen des Ausgabebereichs 36 im Wesentlichen in Längsrichtung des Ausgabereichs 36 erfolgen kann, Der erste Bahnabschnitt kann zum Beispiel linear ausgebildet sein. Ein zweiter Bahnabschnitt, der ebenfalls zum Beispiel linear ausgebildet sein kann, kann zum Beispiel unterhalb des ersten Bahnabschnitts verlaufen.

Ferner kann die Antriebsvorrichtung 54 zum Beispiel eingerichtet sein, um das Wischelement 52 zwischen einer Beschichter-Reinigungsposition, einer Wischelement-Reinigungsposition und einer Wischelement-Konditionierungsposition hin und her zu bewegen (siehe unten).

Die Antriebsvorrichtung 54 kann zum Beispiel ferner eine erste und eine zweite Scheibe oder Umlenkrolle 58, 60 aufweisen, von denen eine antreibbar ist, zum Beispiel mittels eines E-Motors, um die Trägerstruktur 56 und dadurch wiederum das Wischelement 52 zu bewegen.

Das in Figur 1 gezeigte Wischelement 52 befindet sich in einer Position A, die einer Wischelement-Reinigungsposition entspricht. In der Wischelement-Reinigungsposition kann das Wischelement 52 zum Beispiel gereinigt und mit flüssigem Reinigungsmittel infiltriert werden. Die Wischelement-Reinigungsposition muss nicht zwingend einer einzigen Position A entsprechen, sondern kann einer Mehrzahl von Positionen entsprechen, in denen das Wischelement gereinigt und mit flüssigem Reinigungsmittel infiltriert wird.

Die Wischelement-Reinigungsposition kann zum Beispiel dadurch gekennzeichnet sein, dass sich das Wischelement an/in einer Reinigungsstation 70 befindet, durch die das Wischelement gereinigt und mit flüssigem Reinigungsmittel infiltriert wird. Dazu kann die Reinigungsstation zum Beispiel ein Reinigungsbad 72 und eine Wischelementreinigungs-und-Reinigungsmittelübertragungs-Vorrichtung 74 aufweisen, die zum Beispiel als drehbare Walze 76 ausgebildet sein kann. Die Mantelfläche der drehbaren Walze 76 kann zum Beispiel aus dem gleichen saugfähigen Material wie das Wischelement 52 hergestellt sein. Das Reinigungsbad 72 kann zum Beispiel ein organisches Lösungsmittel oder eine wässrige Lösung eines Tensids enthalten.

Die drehbare Walze 76 kann zum Beispiel so angeordnet sein, dass sich ein Teil der Mantelfläche der drehbaren Walze 76 im Reinigungsbad 72 befindet bzw. in dieses eintaucht, so dass der Mantel der Walze 76 Reinigungsmittel aus dem Reinigungsbad 72 aufnehmen kann. Die Drehachse der Walze 76 und die Ebene, die durch die Flüssigkeitsoberfläche des Reinigungsbads 72 gebildet wird, können zum Beispiel parallel sein. Der dem einen Teil der Mantelfläche der Walze 76 gegenüberliegende Teil der Mantelfläche der Walze 76 kann zum Beispiel in Kontakt mit dem Wischelement 52 sein bzw. kann dieses zum Beispiel berühren, so dass der Mantel das zuvor aufgenommene Reinigungsmittel an das Wischelement 52 abgeben kann, wenn sich die Walze um 180° gedreht hat.

Die Walze 76 kann zum Beispiel mittels eines Antriebs 84 (zum Beispiel mittels eines E-Motors) angetrieben werden. Die Walze 76 kann zum Beispiel in beide Drehrichtungen drehbar antreibbar sein. Zum Beispiel ist die Walze 76 gegenläufig zu der Bewegungsrichtung des Wischelements 52 drehbar antreibbar. D.h., wenn das Wischelement 52 in Figur 1 bzw. 2 in Richtung von Position A nach Position B bewegt wird, kann die Walze bevorzugt im Uhrzeigersinn gedreht werden.

Um das Wischelement 52 zu reinigen und mit Reinigungsmittel zu infiltrieren kann zum Beispiel die Seite des Wischelements 52, die zum Reinigen des Ausgabebereichs 36 verwendet ist/wird, über die Walze 76 hinweg bewegt werden, wobei die Walze 76 zum Beispiel in Gegenrichtung zu der Bewegungsrichtung des Wischelements 52 bewegt werden kann. Dadurch kann die Oberfläche des Wischelements 52 mechanisch durch Reibung gereinigt werden und frisches Reinigungsmittel von dem Reinigungsbad 72 an/in das Wischelement übertragen werden. Ferner kann die Walze 76 durch das Reinigungsmittel des Reinigungsbads 72 gereinigt werden. Je nach Verschmutzungsgrad des Wischelements 52 kann das Wischelement 52 zum Beispiel mehrfach über die Walze 76 hin und her bewegt werden. Dazu kann die Antriebsvorrichtung 54 zum Beispiel eingerichtet sein, um die Trägerstruktur 56 in beide Richtungen zu bewegen.

Der 3D-Drucker kann ferner zum Beispiel einen Sensor 82 aufweisen, der eingerichtet ist, um einen Füllstand des Reinigungsbads 72 zu detektieren. Durch den Füllstand des Reinigungsbads kann zum Beispiel ermittelt werden, ob die Mantelfläche der Walze 76 in das Reinigungsbad 72 eintaucht. Somit kann eine Reinigung des Wischelements 52 und eine Übertragung von Reinigungsmittel an/in das Wischelement 52 bzw. eine Infiltration des Wischelements mit Reinigungsmittel mittels der Walze 76 sichergestellt werden.

Um eine übermäßige Infiltration des Wischelements 52 mit Reinigungsmittel zu verhindern, kann die Reinigungsstation 70 zum Beispiel eine Reinigungsmittelmenge-Einstellvorrichtung 78 aufweisen. Diese kann zum Beispiel in Form einer Walze 80 ausgebildet sein, deren Drehachse zum Beispiel parallel zu der Drehachse der Walze 76 angeordnet sein kann und die zum Beispiel mit der drehbaren Walze 76 in Kontakt sein kann bzw. diese berühren kann, so dass ein Teil der Flüssigkeit wieder aus dem saugfähigen Material der drehbaren Walze 76 herausgedrückt werden kann. Die Walze 80 kann zum Beispiel drehbar sein (zum Beispiel in Gegenrichtung zu der Walze 76) und kann zum Beispiel so angeordnet sein, dass der Kontakt- bzw. Berührungspunkt der beiden Walzen 76 und 80 zwischen dem Punkt, an dem die Mantelfläche der drehbaren Walze 76 in das Reinigungsbad eintaucht, und dem Punkt, an dem die Mantelfläche der Walze 76 das Wischelement 52 berührt, ist. Die Walze 80 kann zum Beispiel so gestaltet sein, dass die Drehachse der Walze 80 in Richtung der Drehachse der Walze 76 hin und her verschiebbar bzw. einstellbar ist. Dadurch kann der Anpressdruck der Walze 80 an die Walze 76 eingestellt werden, wodurch die Menge des aus der Walze 76 herausgedrückten Reinigungsmittels gesteuert werden kann.

Die Beschichter-Reinigungsvorrichtung 50 kann ferner zum Beispiel eine Konditionierungsstation 90 aufweisen, die eingerichtet sein kann, um die Rest-Reinigungsmittelmenge, die in dem Wischelement 52 aufgenommen ist, einzustellen. Das Wischelement 52 kann dazu zum Beispiel in seine Wischelement-Konditionierungsposition bewegt werden, nachdem es in der Wischelement-Reinigungsposition gereinigt und mit Reinigungsmittel infiltriert wurde. Die Positionen B und C zeigen zwei ausgewählte Positionen der Wischelement-Konditionierungsposition, D.h., die Wischelement-Konditionierungsposition kann durch eine Mehrzahl von Positionen gebildet werden, die unten genauer erläutert werden.

Die (Rest-)Menge an Reinigungsmittel, die in dem Wischelement 52 aufzunehmen ist, kann zum Beispiel in Abhängigkeit von einem eingesetzten Baumaterial und/oder Bindersystem und/oder Reinigungsmittel und/oder Verschmutzungsgrad und/oder Reinigungsgrad etc. variieren und kann zum Beispiel von einer Steuerung vorgegeben werden.

Im Allgemeinen kann eine Reinigung des Beschichters 30 bzw. dessen Ausgabebereichs 36 durch das im Wischelement 52 aufgenommene Reinigungsmittel erreicht werden. Folglich kann die Reinigungswirkung eines Wischelements 52, in dem eine zu geringe Menge an Reinigungsmittel aufgenommen ist, gering sein. Eine zu große Menge an Reinigungsmittel kann jedoch dazu führen, dass beim Abwischen des Beschichters 30 bzw. dessen Ausgabebereichs 36 ein Teil des Reinigungsmittel an dem Beschichter bzw. an dessen Ausgabebereich 36 haften bleibt, was eine Verklumpung des vom Beschichter ausgegebenen Baumaterials zur Folge haben kann. Es kann daher bevorzugt sein, eine gewünschte Menge an Reinigungsmittel, die in dem Wischelement 52 aufgenommen ist, einzustellen.

Die Konditionierungsstation 90 kann dafür zum Beispiel eine Abstreif- und/oder Ausdrückvorrichtung 92 aufweisen, an der das Wischelement 52 abstreifbar und/oder Reinigungsmittel aus dem Wischelement 52 herausdrückbar ist, um einen Teil des Reinigungsmittels, das in dem Wischelement aufgenommen ist, aus dem Wischelement abzuführen. Die Abstreif- und/oder Ausdrückvorrichtung 92 kann zum Bespiel eine Walze 94 sein, die zum Beispiel drehbar ist. Die Walze 94 kann zum Beispiel so angeordnet sein, dass sie das Wischelement 52 berührt, wenn das Wischelement darüber hinweg verfahren wird (Position B in Figuren 1 und 2), so dass ein Teil des Reinigungsmittels, das in dem Wischelement aufgenommen ist, aus diesem herausgedrückt wird. Die Walze 94 kann zum Beispiel über dem Reinigungsbad 72 angeordnet sein, so dass von der Walze abgestreiftes/ausgedrücktes Reinigungsmittel in das Reinigungsbad 72 zurückführbar ist.

Die Konditionierungsstation 90 kann ferner zum Beispiel eine Fluidstrom-Zufuhrvorrichtung 96 aufweisen, die eingerichtet sein kann, um einen Fluidstrom auf das Wischelement 52 zu richten, um mittels des Fluidstroms einen Teil des Reinigungsmittels, das in dem Wischelement 52 aufgenommen ist, aus dem Wischelement 52 abzuführen. Zum Beispiel kann das Wischelement 52 zunächst an der Walze 94 abgestreift/ausgedrückt und dann mittels der Fluidstrom-Zufuhrvorrichtung 96 weiter behandelt werden, bis eine gewünschte Menge an Reinigungsmittel in dem Wischelement 52 aufgenommen/vorhanden ist. Dazu kann das Wischelement 52 zum Beispiel in die gezeigte Position C bewegt und dort mit einem Fluidstrom behandelt werden. Die Fluidstrom-Zufuhrvorrichtung 96 kann zum Beispiel eine (nicht gezeigte) Fluidstrom-Temperiervorrichtung aufweisen, um die Temperatur des Fluidstroms einzustellen. Die Temperatur des Fluidstroms kann zum Beispiel zwischen 25-200°C einstellbar sein.

Zum Ermitteln der Menge an Reinigungsmittel, die in dem Wischelement 52 aufgenommen ist, kann der 3D-Drucker 10 ferner zum Beispiel eine Sensorvorrichtung 110 mit einem oder mehreren Sensoren 112 aufweisen, die eingerichtet sein kann, um die in dem Wischelement 52 aufgenommene Menge an Reinigungsmittel zu ermitteln. Als Sensoren 112 können zum Beispiel kapazitive Sensoren, elektrolytische Sensoren oder resistive Sensoren verwendet werden. Wie in Figur 2 gezeigt, kann der Sensor 112 sich zum Beispiel in der Wischelement-Konditionierungsstation befinden. Der Sensor 112 kann zum Beispiel so angeordnet sein, dass er das Wischelement 52 abtastet, wenn das Wischelement durch die Fluidstrom-Zufuhrvorrichtung 96 behandelt wird. Dadurch ist es möglich, dem Wischelement 52 so lange einen Fluidstrom zuzuführen, bis die gewünschte Menge an Reinigungsmittel, die in dem Wischelement aufgenommen ist, erreicht ist. Alternativ oder zusätzlich dazu kann ein Sensor zum Beispiel in das Wischelement 52 integriert sein. Alternativ oder zusätzlich dazu kann ein Sensor zum Beispiel auch nach bzw. hinter der Fluidstrom-Zufuhrvorrichtung 96 angeordnet sein, d.h. in den Figuren 1 und 2 links von der Fluidstrom-Zufuhrvorrichtung 96. Ferner kann alternativ oder zusätzlich dazu ein Sensor zum Beispiel an/in der Beschichter-Reinigungsstation 70 angeordnet sein.

Der 3D-Drucker kann ferner zum Beispiel eine Steuerung C aufweisen, die zum Beispiel mit der Sensorvorrichtung 110 bzw. dem Sensor 112, der Antriebsvorrichtung 54, der Konditionierungsstation 90, der Fluidstrom-Zufuhrvorrichtung 96, dem Antrieb 84 und/oder dem Sensor 82 in Verbindung steht. Die Steuerung kann zum Beispiel eingerichtet sein, um auf Basis eines von dem Sensor 112 erhaltenen Werts, der repräsentativ ist für die Menge an Reinigungsmittel, die in dem Wischelement 52 aufgenommen ist, ein Einstellen einer Restmenge an Reinigungsmittel in dem Wischelement 52 zu veranlassen. Dazu kann die Steuerung zum Beispiel durch Ansteuern der Antriebsvorrichtung 54 die Bewegung des Wischelements zwischen den Positionen A, B und C ausführen. Zum Beispiel, wenn durch den Sensor in Position C festgestellt wird, dass die Restmenge zu gering ist, kann das Wischelement 52 erneut zu der Walze 76 bewegt werden, um von dieser erneut mit Reinigungsmittel infiltriert zu werden. Alternativ dazu kann die Steuerung C zum Beispiel den Fluidstrom stoppen, wenn sich das Wischelement in der Position C befindet und ermittelt wird, dass das Wischelement die bevorzugte Restmenge an Reinigungsmittel aufweist. Es kann zum Beispiel bevorzugt sein, dass das Wischelement zunächst ausreichend mit Reinigungsmittel infiltriert wird und anschließend so konditioniert wird, dass ein erneutes Infiltrieren nicht notwendig ist.

Die Beschichter Reinigungsvorrichtung 50 kann ferner zum Beispiel einen Sensor 170 aufweisen, der eingerichtet ist, um eine Umlaufposition der Trägerstruktur 56 und somit eine Position des Wischelements 52 zu detektieren. Hierzu kann zum Beispiel ein Sensor-Target 172 an der Trägerstruktur 56 angeordnet/angebracht sein. Alternativ oder zusätzlich kann zum Beispiel das Wischelement 54 selbst ein solches Sensor-Target 172 aufweisen.

Die hier gezeigte Beschichter-Reinigungsvorrichtung 50 kann ferner zum Beispiel ein optionales Gehäuse 130 aufweisen, in dem die Reinigungsstation 70 und die Konditionierungsstation 90 aufgenommen bzw. angeordnet sind, wobei zum Beispiel eine optionale Befestigungsvorrichtung 150 mit dem Gehäuse verbunden sein kann bzw. an diesem angeordnet sein kann, um das Gehäuse bzw. die Reinigungsstation 70 und die Konditionierungsstation 90 in einer gewünschten Position zu befestigen.

Wie in **Figur 3** gezeigt, kann der Ausgabebereich 36 zum Beispiel einen langgestreckten Ausgabeschlitz 40 und/oder mindestens eine langgestreckte Streichfläche aufweisen, die eingerichtet sein kann, um aus dem Behälter 32 auf ein Baufeld ausgegebenes Baumaterial zu überstreichen, um dadurch das ausgegebene Baumaterial zu nivellieren und/oder zu verdichten. Der Beschichter 30 kann zum Beispiel als ein bidirektionaler Beschichter ausgebildet sein, der in beiden Richtungen (d.h. während einer Fahrt nach links und rechts bzw. während einer Hin- und einer Rückfahrt über das Baufeld) eine Schicht auf ein Baufeld aufbringen kann, wozu der Beschichter mit zwei langgestreckten Streichflächen ausgestattet sein kann, die von zwei leistenförmigen Streichelementen 38a und 38b bzw. deren jeweiliger Unterseite gebildet werden/sein können. Die beiden Streichelemente 38a, 38b können zum Beispiel in Querrichtung des Beschichters (in welcher Richtung der Beschichter horizontal über ein Baufeld hinweg verfahrbar ist) auf gegenüberliegenden Seiten des Ausgabeschlitzes 40 angeordnet sein und können diesen in Querrichtung begrenzen. Es versteht sich, dass der Beschichter zum Beispiel auch als unidirektionaler Beschichter ausgebildet sein kann, mit zum Beispiel lediglich einer Streichfläche bzw. einem Streichelement. Auch ist es denkbar, den Beschichter zum Beispiel ohne Streichfläche/Streichelement zu realisieren.

Wie ferner aus Figur 3 ersichtlich, kann das Wischelement 52 den Ausgabebereich 36 in dessen Querrichtung zum Beispiel vollständig untergreifen, also sowohl den Ausgabeschlitz 40 als auch die beiden Streichflächen, die von der dem Baufeld zugewandten Unterseite des jeweiligen Streichelements 38a, 38b gebildet sein/werden können.

Die Figuren 1 und 2 zeigen unter anderem einen Zustand bzw. eine Position A, die eine abgesenkte Position ist, wo das Wischelement zudem nach unten orientiert ist, um das Wischelement an der Reinigungsstation zu reinigen und mit Reinigungsmittel zu infiltrieren. Die Figur 3 zeigt einen Zustand, in dem sich das Wischelement in einer erhabenen Position befindet und nach oben orientiert ist (vgl. Zustand bzw. Position D in den Figuren 1 und 2), um den Ausgabebereich zu reinigen.

Im normalen Betrieb des 3D-Druckers 10 kann das Wischelement in eine beliebige abgesenkte Position bewegt und nach unten orientiert sein, so dass der Beschichter 30 ohne Kollision in und über die Reinigungsposition hinweg bewegt werden kann. Soll der Beschichter 30 bzw. dessen Ausgabebereich 36 gereinigt werden, so kann er in eine Position über der Reinigungsvorrichtung 50 bewegt und angehalten werden. Danach kann der Antrieb 54 angeschaltet werden bzw. eine der beiden Scheiben/Umlenkrollen 58, 60 gedreht/bewegt werden (zum Beispiel durch die Steuerung C), so dass sich das Wischelement 52, in dem eine zweckmäßige Menge Reinigungsmittel aufgenommen ist bzw. das mit einer zweckmäßigen Menge an Reinigungsmittel infiltriert ist, aus seiner abgesenkten Position nach oben bewegt. Durch ein zweckmäßiges Bewegungsmuster des Wischelements 52 bzw. der Trägerstruktur 56 relativ zu dem Beschichter kann eine gewünschte Reinigungswirkung erzielt werden. Zum Beispiel kann die Trägerstruktur 56 dauerhaft in eine Richtung bewegt werden, oder die Trägerstruktur 56 kann wechselweise nach links und rechts bewegt werden, wenn sich das Wischelement in der erhabenen, nach oben ausgerichteten Position D befindet. Nachdem der Ausgabebereich 36 ausreichend gereinigt wurde, kann das Wischelement wieder nach unten bewegt werden, so dass das Wischelement 52 gereinigt und mit neuem Reinigungsmittel versorgt werden kann und der Beschichter 30 ohne Kollision über die Reinigungsposition bewegt werden kann. Auch ist es möglich, während einer Reinigung des Beschichters das Wischelement zwischen-zu-reinigen und mit neuem Reinigungsmittel zu infiltrieren.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich, Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. 3D-Drucker (10) mit einem Beschichter (30) und einer Beschichter-Reinigungsvorrichtung (50),
wobei der Beschichter (30) einen Behälter (32), der einen inneren Hohlraum (34) zur Aufnahme von partikelförmigem Baumaterial definiert, und einen Ausgabebereich (36) zum Ausgeben des partikelförmigen Baumaterials aufweist und in eine Reinigungsposition verfahrbar ist, in der er über der Beschichter-Reinigungsvorrichtung (50) angeordnet ist,
wobei die Beschichter-Reinigungsvorrichtung (50) ein Wischelement (52) zum Abwischen des Ausgabebereichs (36) aufweist,
**dadurch gekennzeichnet, dass**
das Wischelement (52) aus einem saugfähigen Material gebildet ist, das konfiguriert ist, um ein flüssiges Reinigungsmittel in sich aufzunehmen.

2. 3D-Drucker (10) nach Anspruch 1, wobei das Wischelement (52) aus einem saugfähigen, porösen Schwamm oder einem saugfähigen Textilstoff, zum Beispiel einem saugfähigen Vlies, gebildet ist.

3. 3D-Drucker (10) nach Anspruch 1 oder 2, wobei das Wischelement (52) von einer Beschichter-Reinigungsposition, in der das Wischelement (52) für ein Abwischen des Ausgabebereichs (36) ausgerichtet ist, in eine Wischelement-Reinigungsposition, in der das Wischelement (52) für eine Reinigung des Wischelements (52) selbst ausgerichtet ist, und zu der Beschichter-Reinigungsposition zurück bewegbar ist,
wobei zum Beispiel die Beschichter-Reinigungsvorrichtung (50) eine Reinigungsstation (70) aufweist, die konfiguriert ist, um das Wischelement (52) zu reinigen und mit flüssigem Reinigungsmittel zu infiltrieren, wenn sich das Wischelement (52) in seiner Wischelement-Reinigungsposition befindet,
wobei optional die Reinigungsstation (70) ein Reinigungsbad (72) aus dem flüssigen Reinigungsmittel aufweist,
wobei optional die Reinigungsstation (70) eine Wischelementreinigungs-und-Reinigungsmittelübertragungs-Vorrichtung (74) aufweist, die eingerichtet ist, um Reinigungsmittel von dem Reinigungsbad (72) zu dem Wischelement (52) zu transportieren und das Wischelement (52) zu reinigen, wenn sich das Wischelement (52) in seiner Wischelement-Reinigungsposition befindet, wobei die Wischelementreinigungs-und-Reinigungsmittelübertragungs-Vorrichtung (74) zum Beispiel eine drehbare Walze (76) mit einem saugfähigen Material aufweist, das konfiguriert ist, um flüssiges Reinigungsmittel in sich aufzunehmen,
wobei optional die Reinigungsstation (70) eine Reinigungsmittelmenge-Einstellvorrichtung (78) aufweist, die eingerichtet ist, um die Reinigungsmittelmenge, die durch die Wischelementreinigungs-und-Reinigungsmittelübertragungs-Vorrichtung (74) von dem Reinigungsbad (72) zu dem Wischelement (52) transportiert wird, einzustellen, zum Beispiel zu begrenzen, zum Beispiel durch Herausdrücken von Flüssigkeit aus dem saugfähigen Material der drehbaren Walze.

4. 3D-Drucker (10) nach Anspruch 3, wobei das Wischelement (52) ferner in eine Wischelement-Konditionierungsposition bewegbar ist, die sich zwischen der Beschichter-Reinigungsposition und der Wischelement-Reinigungsposition befindet und in der eine Reinigungsmittelmenge, die in dem Wischelement (52) aufgenommen ist, einstellbar ist,
wobei zum Beispiel die Beschichter-Reinigungsvorrichtung (50) eine Konditionierungsstation (90) aufweist, die eingerichtet ist, um die Reinigungsmittelmenge, die in dem Wischelement (52) aufgenommen ist, einzustellen, wenn sich das Wischelement (52) in seiner Wischelement-Konditionierungsposition befindet, zum Beispiel zu reduzieren, zum Beispiel durch Austreiben von Reinigungsmittel, das in dem Wischelement (52) aufgenommen ist, aus dem Wischelement (52) durch Mitführen/Abführen von Reinigungsmittel in einem Fluidstrom und/oder durch thermisches Austreiben von Reinigungsmittel und/oder durch mechanisches Austreiben von Reinigungsmittel,
wobei optional die Konditionierungsstation (90) eine Abstreif- und/oder Ausdrückvorrichtung (92) aufweist, an der das Wischelement (52) abstreifbar und/oder Reinigungsmittel aus dem Wischelement (52) herausdrückbar ist, um einen Teil des Reinigungsmittels, das in dem Wischelement (52) aufgenommen ist, aus dem Wischelement (52) abzuführen, wobei die Abstreif- und/oder Ausdrückvorrichtung (92) zum Beispiel über dem Reinigungsbad (72) angeordnet ist oder anderweitig mit diesem in Fluidverbindung steht, so dass das aus dem Wischelement (52) abgestreifte und/oder ausgedrückte Reinigungsmittel in das Reinigungsbad (72) rückführbar ist, und/oder eine Walze (94) aufweist, an der das Wischelement (52) ausdrückbar ist,
und/oder wobei optional die Konditionierungsstation (90) eine Fluidstrom-Zufuhrvorrichtung (96) aufweist, die eingerichtet ist, einen Fluidstrom auf das Wischelement (52) zu richten, um mittels des Fluidstroms einen Teil des Reinigungsmittels, das in dem Wischelement (52) aufgenommen ist, aus dem Wischelement (52) abzuführen, wobei die Fluidstrom-Zufuhrvorrichtung (96) zum Beispiel ferner eingerichtet ist, um eine Temperatur des Gasstroms einzustellen.

5. 3D-Drucker (10) nach einem der vorangehenden Ansprüche, ferner aufweisend eine Sensorvorrichtung (110), mit der eine Menge an Reinigungsmittel, die in dem Wischelement (52) aufgenommen ist, ermittelbar ist, wobei die Sensorvorrichtung (110) zum Beispiel ein oder mehrere kapazitive Sensoren (112) und/oder ein oder mehrere elektrolytische Sensoren (112) und/oder ein oder mehrere resistive Sensoren (112) aufweist, wobei die Sensorvorrichtung (110) zum Beispiel eingerichtet ist, die in dem Wischelement (52) aufgenommene Menge an Reinigungsmittel zu ermitteln, wenn sich das Wischelement (52) in einer oder mehreren oder jeder der folgenden Positionen befindet, die ausgewählt sind aus der Wischelement-Konditionierungsposition, zum Beispiel im Strömungspfad der Fluidstrom-Zufuhrvorrichtung (96), der Beschichter-Reinigungsposition und der Wischelement-Reinigungsposition.

6. 3D-Drucker (10) nach Anspruch 5, ferner aufweisend eine Steuerung (C), die mit der Sensorvorrichtung (110) in Verbindung steht und eingerichtet ist, um auf Basis eines von der Sensorvorrichtung (110) erhaltenen Werts, der repräsentativ ist für die Menge an Reinigungsmittel, die in dem Wischelement (52) aufgenommen ist, ein Einstellen einer Restmenge an Reinigungsmittel in dem Wischelement (52) zu veranlassen, zum Beispiel mittels Ansteuerns der Konditionierungsstation (90), zum Beispiel der Fluidstrom-Zufuhrvorrichtung (96) und/oder der Abstreif- und/oder Ausdrückvorrichtung (92) derselben, und/oder Ansteuerns eines Antriebs für das Wischelement (52) und/oder Ansteuern der Reinigungsstation (70), wobei die Steuerung (C) zum Beispiel eine Restmenge an Reinigungsmittel in dem Wischelement (52) in Abhängigkeit von einem eingesetzten Baumaterial und/oder Bindersystem und/oder Reinigungsmittel und/oder einer Art des saugfähigen Materials und/oder eines Reinigungsintervalls des Beschichters und/oder eines Verschmutzungsgrads des Beschichters einstellt.

7. 3D-Drucker (10) nach einem der vorangehenden Ansprüche, wobei die Beschichter-Reinigungsvorrichtung (50) ferner eine Antriebsvorrichtung (54) zum Bewegen des Wischelements (52) aufweist, die eingerichtet ist, um das Wischelement (52) relativ zu dem Ausgabebereich (36) für eine Reinigung desselben zu bewegen, wenn sich der Beschichter (30) über der Beschichter-Reinigungsvorrichtung (50) befindet, und/oder um das Wischelement (52) zwischen der Beschichter-Reinigungsposition, der Wischelement-Reinigungsposition und der Wischelement-Konditionierungsposition zu bewegen,
wobei optional die Antriebsvorrichtung (54) eine Trägerstruktur (56), zum Beispiel in Form eines Riemens, aufweist, an welcher das Wischelement (52) lösbar angebracht ist, zum Beispiel mittels eines Schnellverschlusses,
und/oder wobei optional die Antriebsvorrichtung (54) eingerichtet ist, um das Wischelement (52) in eine abgesenkte Position zu bewegen, in der eine Kollision mit dem Beschichter (30) vermieden wird, wobei sich das Wischelement (52) zum Beispiel in der Wischelement-Reinigungsposition und/oder in der Wischelement-Konditionierungsposition in der abgesenkten Position befindet, wohingegen es in der Beschichter-Reinigungsposition zum Beispiel in einer erhabenen Position angeordnet ist,
und/oder wobei optional die Antriebsvorrichtung (54) eingerichtet ist, um das Wischelement (52) für eine Reinigung des Ausgabebereichs (36) entlang desselben zu bewegen, wenn sich der Beschichter (30) über der Beschichter-Reinigungsvorrichtung (50) befindet, wobei die Antriebsvorrichtung (54) zum Beispiel eingerichtet ist, das Wischelement (52) entlang einer Umlaufbahn zu bewegen, die sich mit einem ersten Bahnabschnitt entlang des Ausgabebereichs (36) erstreckt, wenn sich der Beschichter (30) in der Beschichter-Reinigungsposition befindet, wobei die Antriebsvorrichtung (54) zum Beispiel eine langgestreckte Trägerstruktur (56) aufweist, zum Beispiel einen Riemen, an der das Wischelement (52) angebracht ist und die in Längsrichtung umlaufend um einen externen Punkt herum bewegbar ist, um dadurch das Wischelement (52) entlang seiner Umlaufbahn zu bewegen.

8. 3D-Drucker (10) nach einem der vorangehenden Ansprüche, wobei der Ausgabebereich (36) einen langgestreckten Ausgabeschlitz (40) und/oder mindestens eine langgestreckte Streichfläche aufweist, die eingerichtet ist, um aus dem Behälter (32) ausgegebenes Baumaterial zu überstreichen, um dadurch das ausgegebene Baumaterial zu nivellieren und/oder zu verdichten, wobei zum Beispiel die mindestens eine langgestreckte Streichfläche von dem Wischelement (52) abwischbar ist und/oder wobei zum Beispiel das Wischelement (52) eine Erstreckung in einer quer zur Längsrichtung der Streichfläche verlaufenden Breitenrichtung hat, die größer oder gleich der von der langgestreckten Streichfläche ist, zum Beispiel größer oder gleich der von dem Ausgabebereich (36).

9. 3D-Drucker (10) nach einem der vorangehenden Ansprüche, wobei die Beschichter-Reinigungsvorrichtung (50) eine Mehrzahl von Wischelementen (52) aufweist, welche zum Beispiel gemeinsam in eine jeweils abgesenkte Position bewegbar sind, um eine Kollision mit dem Beschichter (30) zu vermeiden.

10. 3D-Drucker (10) nach einem der vorangehenden Ansprüche, ferner aufweisend einen Sensor (170), der eingerichtet ist, um eine Position des Wischelements (52) zu detektieren, und/oder einen Sensor (82), der eingerichtet ist, um einen Füllstand des Reinigungsbads (72) zu detektieren.

11. 3D-Drucker (10) nach einem der vorangehenden Ansprüche, ferner aufweisend eine Druckvorrichtung mit einem Druckkopf zum selektiven Verfestigen eines Teilbereichs einer mittels des Beschichters aufgebrachten Baumaterialschicht und/oder zum selektiven Bedrucken einer mittels des Beschichters aufgebrachten Baumaterialschicht mit Behandlungsmittel.

12. Verfahren zum Reinigen eines Beschichters (30) von einem 3D-Drucker (10), wobei der Beschichter (30) einen Behälter (32) aufweist, der einen inneren Hohlraum (34) zur Aufnahme von partikelförmigem Baumaterial definiert, und einen Ausgabebereich (36) zum Ausgeben des partikelförmigen Baumaterials hat, aufweisend:
Verfahren des Beschichters (30) in eine Reinigungsposition, in der der Beschichter (30) über einer Beschichter-Reinigungsvorrichtung (50) angeordnet ist, die ein Wischelement (52) aufweist, das aus einem saugfähigen Material gebildet ist, das konfiguriert ist, um ein flüssiges Reinigungsmittel in sich aufzunehmen, und
Abwischen des Ausgabebereichs (36) mit dem Wischelement (52) in einem Zustand, in dem das Wischelement (52) mit flüssigem Reinigungsmittel befeuchtet ist.

13. Verfahren zum Reinigen eines Beschichters (30) von einem 3D-Drucker (10) nach Anspruch 12, ferner aufweisend:
Bewegen des Wischelements (52) zu einer Reinigungsstation (70) und Reinigen des Wischelements (52) und/oder Infiltrieren des Wischelements (52) mit Reinigungsmittel in der Reinigungsstation (70) und/oder
Bewegen des Wischelements (52) zu einer Konditionierungsstation (90) und Einstellen einer Reinigungsmittelmenge, die in dem Wischelement (52) aufgenommen ist, in der Konditionierungsstation (90), zum Beispiel nach dem Bewegen des Wischelements (52) zu der Reinigungsstation (70) und/oder vor dem Abwischen des Ausgabebereichs (36) mit dem Wischelement (52), zum Beispiel in Abhängigkeit von einem eingesetzten Baumaterial und/oder Bindersystem und/oder Reinigungsmittel, zum Beispiel um die Reinigungsmittelmenge zu reduzieren, zum Beispiel durch Austreiben von Reinigungsmittel aus dem Wischelement (52) durch Mitführen/Abführen von Reinigungsmittel in einem Fluidstrom und/oder durch thermisches Austreiben von Reinigungsmittel und/oder durch mechanisches Austreiben von Reinigungsmittel, und/oder
Ermitteln einer Menge an Reinigungsmittel, die in dem Wischelement (52) aufgenommen ist, zum Beispiel unter Verwendung eines Sensors (112), zum Beispiel nach dem Bewegen des Wischelements (52) zu der Reinigungsstation (70) und/oder vor dem Abwischen des Ausgabebereichs (36) mit dem Wischelement (52), und/oder
Bewegen des Wischelements (52) in eine abgesenkte Position, um eine Kollision mit dem Beschichter (30) zu vermeiden, nach dem Abwischen des Ausgabebereichs (36) mit dem Wischelement (52), und/oder
Austauschen des Wischelements (52) durch ein anderes Wischelement (52), nachdem das Wischelement (52) verschlissen ist oder in Anpassung an ein eingesetztes Baumaterial und/oder Bindersystem und/oder Reinigungsmittel.

14. Verfahren zum Reinigen eines Beschichters (30) von einem 3D-Drucker (10) nach Anspruch 12 oder 13, wobei
der Ausgabebereich (36) eine langgestreckte Form hat und das Abwischen des Ausgabebereichs (36) mit dem Wischelement (52) im Wesentlichen in Längsrichtung des Ausgabebereichs (36) erfolgt und/oder
das Bewegen des Wischelements (52) auf einer geschlossenen Bahnkurve erfolgt und/oder
das Verfahren zum Reinigen des Beschichters (30) softwaregesteuert abläuft.

## Claims

1. 3D printer (10) having a coating device (30) and a coating device cleaning device (50),
wherein the coating device (30) comprises a container (32) which defines an inner cavity (34) for receiving particulate construction material, and an output region (36) for outputting the particulate construction material, and is movable into a cleaning position in which it is arranged above the coating device cleaning device (50),
wherein the coating device cleaning device (50) comprises a wiping member (52) for wiping the output region (36),
**characterized in that**
the wiping member (52) is made from an absorbent material which is configured to absorb a liquid cleaning agent in itself.

2. 3D printer (10) according to claim 1, wherein the wiping member (52) is made from an absorbent, porous sponge or an absorbent textile material, for example an absorbent non-woven material.

3. 3D printer (10) according to claim 1 or 2,
wherein the wiping member (52) is movable from a cleaning device cleaning position in which the wiping member (52) is aligned for wiping the output region (36) into a wiping member cleaning position in which the wiping member (52) is aligned for a cleaning of the wiping member (52) itself, and back into the cleaning device cleaning position,
wherein, for example, the coating device cleaning device (50) comprises a cleaning station (70) which is configured to clean the wiping member (52) and infiltrate it with liquid cleaning agent, when the wiping member (52) is positioned in its wiping member cleaning position,
wherein, optionally, the cleaning station (70) comprises a cleaning bath (72) of liquid cleaning agent,
wherein, optionally, the cleaning station (70) comprises a wiping member cleaning and cleaning agent transmission device (74) which is configured to transport cleaning agent from the cleaning bath (72) to the wiping member (52) and to clean the wiping member (52), when the wiping member (52) is located in its wiping member cleaning position, wherein the wiping member cleaning and cleaning agent transmission device (74) comprises, for example, a rotatable roller (76) having an absorbent material, which is configured to absorb liquid cleaning agent in itself,
wherein, optionally, the cleaning station (70) comprises a cleaning agent amount adjusting device (78) which is configured to adjust, for example to limit the cleaning agent amount which is transported by the wiping member cleaning and cleaning agent transmission device (74) from the cleaning bath (72) to the wiping member (52), for example by squeezing liquid out of the absorbent material of the rotatable drum.

4. 3D printer (10) according to claim 3, wherein the wiping member (52) is further movable into a wiping member conditioning position which is located between the coating device cleaning position and the wiping member cleaning position, and in which a cleaning agent amount which is received in the wiping member (52) is adjustable,
wherein, for example, the coating device cleaning device (50) comprises a conditioning station (90) which is configured to adjust, for example to reduce the cleaning agent amount which is received in the wiping member (52) when the wiping member (52) is in its wiping member conditioning position, for example by driving cleaning agent received in the wiping member (52) out of the wiping member (52) by carrying along/discharging cleaning agent in a fluid stream and/or by thermal driving out of cleaning agent and/or by mechanical driving out of cleaning agent,
wherein, optionally, the conditioning station (90) comprises a stripping and/or squeezing device (92) where the wiping member (52) can be stripped off and/or cleaning agent can be squeezed out of the wiping member (52), to discharge a part of the cleaning agent which is received in the wiping member (52) from the wiping member (52), wherein the stripping and/or squeezing device (92) is, for example, arranged above the cleaning bath (72) or is otherwise in fluid connection with the same, so that the cleaning agent stripped off and/or squeezed out of the wiping member (52) can be returned to the cleaning bath (72), and/or comprises a roller (94) where the wiping member (52) can be squeezed,
and/or wherein, optionally, the conditioning station (90) comprises a fluid stream supply device (96) which is configured to direct a fluid stream onto the wiping member (52), to discharge, by means of the fluid stream, a part of the cleaning agent received in the wiping member (52) from the wiping member (52), wherein the fluid stream supply device (96) is, for example, further configured to set a temperature of the gas stream.

5. 3D printer (10) according to any one of the preceding claims, further comprising a sensor device (110) by which an amount of cleaning agent received in the wiping member (52) can be determined, wherein the sensor device (110) comprises, for example, one or more capacitive sensors (112) and/or one or more electrolytic sensors (112) and/or one or more resistive sensors (112), wherein the sensor device (110) is, for example, configured to determine the amount of cleaning agent received in the wiping member (52) when the wiping member (52) is located in one or more or each of the following positions selected from the wiping member conditioning position, for example in the flow path of the fluid stream supply device (96), the coating device cleaning position and the wiping member cleaning position.

6. 3D printer (10) according to claim 5, further comprising a control (C) which is connected to the sensor device (110) and configured to prompt, on the basis of a value received from the sensor device (110), which is representative of the amount of cleaning agent received in the wiping member (52), an adjustment of a residual amount of cleaning agent in the wiping member (52), for example by means of driving/controlling the conditioning station (90), for example the fluid stream supply device (96) and/or the stripping and/or squeezing device (92) thereof, and/or driving/controlling a drive of the wiping member (52) and/or driving/controlling the cleaning station (70), wherein the control (C) for example sets a residual amount of cleaning agent in the wiping member (52) depending on a used construction material and/or binder system and/or cleaning agent and/or a type of the absorbent material and/or a cleaning interval of the coating device and/or a degree of contamination of the coating device.

7. 3D printer (10) according to any one of the preceding claims, wherein the coating device cleaning device (50) further comprises a driving device (54) for moving the wiping member (52), which is configured to move the wiping member (52) relative to the output region (36) for a cleaning thereof, when the coating device (30) is positioned above the coating device cleaning device (50), and/or to move the wiping member (52) between the coating device cleaning position, the wiping member cleaning position and the wiping member conditioning position,
wherein, optionally, the driving device (54) comprises a carrier structure (56), for example in the form of a strap, to which the wiping member (52) is releasably attached, for example by means of a quick fastener,
and/or wherein, optionally, the driving device (54) is configured to move the wiping member (52) into a lowered position in which a collision with the coating device (30) is avoided, wherein the wiping member (52) is, for example, located in the lowered position in the wiping member cleaning position and/or in the wiping member conditioning position, whereas it is, for example, arranged in an elevated position in the coating device cleaning position,
and/or wherein, optionally, the driving device (54) is configured to move the wiping member (52) for a cleaning of the output region (36) along the same, when the coating device (30) is positioned above the coating device cleaning device (50), wherein the driving device (54) is, for example, configured to move the wiping member (52) along a circulating path which extends with a first path section along the output region (36), when the coating device (30) is in the coating device cleaning position, wherein the driving device (54) comprises, for example, an elongate carrier structure (56), for example a strap, to which the wiping member (52) is attached and which is movable in a longitudinal direction in a way to revolve around an external point, to thereby move the wiping member (52) along its circulating path.

8. 3D printer (10) according to any one of the preceding claims, wherein the output region (36) comprises an elongate output slot (40) and/or at least one elongate stroking surface which is configured to stroke construction material output from the container (32), to thereby level and/or compress the output construction material, wherein, for example, the at least one elongate stroking surface can be wiped off by the wiping member (52) and/or, wherein, for example, the wiping member (52) has an extension in a width direction extending crosswise to the longitudinal direction of the stroking surface, which is greater than or equal to that of the elongate stroking surface, for example greater than or equal to that of the output region (36).

9. 3D printer (10) according to any one of the preceding claims, wherein the coating device cleaning device (50) comprises a plurality of wiping members (52) which are, for example, movable together into a respectively lowered position, to avoid a collision with the coating device (30).

10. 3D printer (10) according to any one of the preceding claims, further comprising a sensor (170) which is configured to detect a position of the wiping member (52), and/or a sensor (82) which is configured to detect a filling level of the cleaning bath (72).

11. 3D printer (10) according to any one of the preceding claims, further comprising a printing device having a print head for selectively solidifying a partial area of a construction material layer applied by means of the coating device and/or for selectively printing a treatment agent onto a construction material layer applied by means of the coating device.

12. Method for cleaning a coating device (30) of a 3D printer (10), the coating device (30) comprising a container (32) which defines an inner cavity (34) for receiving particulate construction material, and has an output region (36) for outputting the particulate construction material, comprising:
moving the coating device (30) into a cleaning position in which the coating device (30) is arranged above a coating device cleaning device (50) comprising a wiping member (52) which is made from an absorbent material configured to absorb a liquid cleaning agent in itself, and
wiping the output region (36) by the wiping member (52) in a state in which the wiping member (52) is moistened with a liquid cleaning agent.

13. Method for cleaning a coating device (30) of a 3D printer (10) according to claim 12, further comprising:
moving the wiping member (52) to a cleaning station (70) and cleaning the wiping member (52) and/or infiltrating the wiping member (52) with cleaning agent in the cleaning station (70), and/or
moving the wiping member (52) to a conditioning station (90) and adjusting a cleaning agent amount received in the wiping member (52), in the conditioning station (90), for example after moving the wiping member (52) to the cleaning station (70) and/or before wiping the output region (36) using the wiping member (52), for example depending on a used construction material and/or binder system and/or cleaning agent, for example to reduce the cleaning agent amount, for example by driving cleaning agent out of the wiping member (52) by carrying along/discharging cleaning agent in a fluid stream and/or by thermal driving out of cleaning agent and/or by mechanical driving out of cleaning agent, and/or
determining an amount of cleaning agent received in the wiping member (52), for example using a sensor (112), for example after moving the wiping member (52) to the cleaning station (70) and/or before wiping the output region (36) using the wiping member (52), and/or
moving the wiping member (52) into a lowered position to avoid a collision with the coating device (30), after wiping the output region (36) using the wiping member (52), and/or
replacing the wiping member (52) with another wiping member (52) once the wiping member (52) is worn out or in adaptation to a used construction material and/or binder system and/or cleaning agent.

14. Method for cleaning a coating device (30) of a 3D printer (10) according to claim 12 or 13, wherein
the output region (36) has an elongate shape and wiping the output region (36) using the wiping member (52) is substantially carried out in a longitudinal direction of the output region (36), and/or
moving the wiping member (52) takes place on a closed trajectory, and/or
displacement for cleaning the coating device (30) takes place in a software-controlled way.

## Revendications

1. Imprimante 3D (10) avec un applicateur (30) et un dispositif de nettoyage d'applicateur (50),
l'applicateur (30) comprenant un récipient (32), qui définit une cavité interne (34) pour le logement d'un matériau de construction particulaire, et une zone de distribution (36) pour la distribution du matériau de construction particulaire et pouvant être déplacé vers une position de nettoyage dans laquelle il est disposé au-dessus du dispositif de nettoyage de l'applicateur (50),
le dispositif de nettoyage de l'applicateur (50) comprenant un élément d'essuyage (52) pour l'essuyage de la zone de distribution (36),
**caractérisée en ce que**
l'élément d'essuyage (52) est constitué d'un matériau absorbant qui est conçu pour absorber un produit de nettoyage liquide.

2. Imprimante 3D (10) selon la revendication 1, l'élément d'essuyage (52) étant constitué d'une éponge absorbante poreuse ou d'une matière textile absorbante, par exemple un non-tissé absorbant.

3. Imprimante 3D (10) selon la revendication 1 ou 2, l'élément d'essuyage (52) pouvant être déplacé d'une position de nettoyage d'applicateur, dans laquelle l'élément d'essuyage (52) est orienté pour l'essuyage de la zone de distribution (36), vers une position de nettoyage d'élément d'essuyage, dans laquelle l'élément d'essuyage (52) est orienté pour un nettoyage de l'élément d'essuyage (52) lui-même puis à nouveau vers la position de nettoyage de l'applicateur,
par exemple, le dispositif de nettoyage d'applicateur (50) comprenant une station de nettoyage (70) qui est conçue pour nettoyer l'élément d'essuyage (52) et de l'imbiber avec un produit de nettoyage liquide lorsque l'élément d'essuyage (52) se trouve dans sa position de nettoyage de l'élément d'essuyage,
en option, la station de nettoyage (70) comprenant un bain de nettoyage (72) constitué du produit de nettoyage liquide,
en option, la station de nettoyage (70) comprenant un dispositif de nettoyage d'élément d'essuyage et de transmission de produit de nettoyage (74), qui est conçu pour transporter le produit de nettoyage du bain de nettoyage (72) vers l'élément d'essuyage (52), et nettoyer l'élément d'essuyage (52), lorsque l'élément d'essuyage (52) se trouve dans sa position de nettoyage d'élément d'essuyage, le dispositif de nettoyage d'élément d'essuyage et de transmission de produit de nettoyage (74) comprenant par exemple un rouleau rotatif (76) avec un matériau absorbant, qui est conçu pour absorber un produit de nettoyage liquide,
en option, la station de nettoyage (70) comprenant un dispositif de réglage de la quantité de produit de nettoyage (78), qui est conçu pour régler la quantité de produit de nettoyage qui est transportée par l'intermédiaire du dispositif de nettoyage d'élément d'essuyage et de transmission de produit de nettoyage (74) du bain de nettoyage (72) vers l'élément d'essuyage (52), par exemple pour la limiter, par exemple par l'expulsion du liquide hors du matériau absorbant du rouleau rotatif.

4. Imprimante 3D selon la revendication 3, l'élément d'essuyage (52) étant mobile en outre vers une position de conditionnement d'élément d'essuyage qui se trouve entre la position de nettoyage d'applicateur et la position de nettoyage de l'élément d'essuyage et dans laquelle une quantité de produit de nettoyage absorbée dans l'élément d'essuyage (52) peut être réglée,
par exemple le dispositif de nettoyage d'applicateur (50) comprenant une station de conditionnement (90) qui est conçue pour régler la quantité de produit de nettoyage absorbée dans l'élément d'essuyage (52) lorsque l'élément d'essuyage (52) se trouve dans sa position de conditionnement d'élément d'essuyage, par exemple pour la réduire par l'expulsion du produit de nettoyage, qui est absorbé dans l'élément d'essuyage (52), hors de l'élément d'essuyage (52) par entraînement/évacuation du produit de nettoyage dans un flux de fluide et/ou par expulsion thermique du produit de nettoyage et/ou par expulsion mécanique du produit de nettoyage,
en option, la station de conditionnement (90) comprenant un dispositif de raclage et/ou d'expulsion (92), au niveau de laquelle l'élément d'essuyage (52) peut être raclé et/ou le produit de nettoyage peut être expulsé de l'élément d'essuyage (52), afin d'évacuer une partie du produit de nettoyage, qui est absorbé dans l'élément d'essuyage (52), hors de l'élément d'essuyage (52), le dispositif de raclage et/ou d'expulsion (92) étant disposé par exemple au-dessus du bain de nettoyage (72) ou étant relié avec celui-ci à l'aide d'une liaison fluidique, de façon à ce que le produit de nettoyage raclé et/ou expulsé hors de l'élément d'essuyage (52) puisse être retournée vers le bain de nettoyage (72) et/ou comprenant un rouleau (94) au niveau duquel l'élément d'essuyage (52) peut être expulsé,
et/ou, en option, la station de conditionnement (90) comprenant en outre un dispositif d'alimentation en flux de fluide (96), qui est conçu pour diriger un flux de fluide vers l'élément d'essuyage (52) afin d'évacuer, au moyen du flux de fluide, une partie du produit de nettoyage, qui est absorbé dans l'élément d'essuyage (52), hors de l'élément d'essuyage (52), le dispositif d'alimentation en flux de fluide (96) étant par exemple, en outre conçu pour régler une température du flux de gaz.

5. Imprimante 3D (10) selon l'une des revendications précédentes, comprenant en outre un dispositif de capteur (110) à l'aide duquel une quantité de produit de nettoyage absorbée dans l'élément d'essuyage (52), peut être déterminée, le dispositif de capteur (110) comprenant par exemple un ou plusieurs capteurs capacitifs (112) et/ou un ou plusieurs capteurs électrolytiques (112) et/ou un ou plusieurs capteurs résistifs (112), le dispositif de capteur (110) étant par exemple conçu pour déterminer la quantité de produit de nettoyage absorbée dans l'élément d'essuyage (52) lorsque l'élément d'essuyage (52) se trouve dans une ou plusieurs ou dans chacune des positions suivantes, qui sont sélectionnées parmi la position de conditionnement de l'élément d'essuyage, par exemple dans le chemin d'écoulement du dispositif d'alimentation en flux de fluide (96), la position de nettoyage de l'applicateur et la position de nettoyage de l'élément d'essuyage.

6. Imprimante 3D (10) selon la revendication 5, comprenant en outre un dispositif de commande (C), qui est relié avec le dispositif de capteur (110) et qui est conçu pour effectuer, sur la base d'une valeur obtenue par le dispositif de capteur (110), qui est représentative de la quantité de produit de nettoyage absorbée dans l'élément d'essuyage (52), un réglage d'une quantité résiduelle de produit de nettoyage dans l'élément d'essuyage (52), par exemple au moyen de la commande de la station de conditionnement (90), par exemple du dispositif d'alimentation en flux de fluide (96) et/ou du dispositif de raclage et/ou d'expulsion (92) de celui-ci et/ou au moyen de la commande d'un dispositif d'entraînement pour l'élément d'essuyage (52) et/ou la commande de la station de nettoyage (70), le dispositif de commande (C) réglant par exemple une quantité résiduelle de produit de nettoyage dans l'élément d'essuyage (52) en fonction d'un matériau de construction et/ou du système de liant et/ou du produit de nettoyage et/ou d'un type de matériau absorbant et/ou d'un intervalle de nettoyage de l'applicateur et/ou d'un degré d'encrassement de l'applicateur.

7. Imprimante 3D (10) selon l'une des revendications précédentes, le dispositif de nettoyage d'applicateur (50) comprenant en outre un dispositif d'entraînement (54) pour le déplacement de l'élément d'essuyage (52) qui est conçu pour déplacer l'élément d'essuyage (52) par rapport à la zone de distribution (36) pour un nettoyage de celui-ci, lorsque l'applicateur (30) se trouve au-dessus du dispositif de nettoyage d'applicateur (50) et/ou afin de déplacer l'élément d'essuyage (52) entre la position de nettoyage de l'applicateur, la position de nettoyage de l'élément d'essuyage et la position de conditionnement de l'élément d'essuyage,
en option, le dispositif d'entraînement (54) comprenant une structure porteuse (56), par exemple sous la forme d'une courroie, sur laquelle l'élément d'essuyage (52) peut être monté de manière amovible, par exemple au moyen d'un verrouillage rapide,
et/ou en option le dispositif d'entraînement (54) étant conçu pour déplacer l'élément d'essuyage (52) vers une position abaissée, dans laquelle une collision avec l'applicateur (30) est évité, l'élément d'essuyage (52) se trouvant par exemple dans la position de nettoyage d'élément d'essuyage et/ou dans la position de conditionnement de l'élément d'essuyage dans la position abaissée, moyennant quoi, en revanche, il se trouve, dans la position de nettoyage d'applicateur, par exemple dans une position élevée,
et/ou, en option, le dispositif d'entraînement (54) étant conçu pour déplacer l'élément d'essuyage (52) pour un nettoyage de la zone de distribution (36) le long de celui-ci, lorsque l'applicateur (30) se trouve au-dessus du dispositif de nettoyage d'applicateur (50), le dispositif d'entraînement (54) étant par exemple conçu pour déplacer l'élément d'essuyage (52) le long d'une trajectoire circulaire qui s'étend, avec une première portion de trajectoire, le long de la zone de distribution (36), lorsque l'applicateur (30) se trouve dans la position de nettoyage d'applicateur, le dispositif d'entraînement (54) comprenant par exemple une structure porteuse (56) allongée, par exemple une courroie, sur laquelle l'élément d'essuyage (52) est monté et qui est mobile de manière circulaire dans la direction longitudinale autour d'un point externe, afin de déplacer l'élément d'essuyage (52) le long de sa trajectoire circulaire.

8. Imprimante 3D (10) selon l'une des revendications précédentes, la zone de distribution (36) comprenant une fente de distribution allongée (40) et/ou au moins une surface d'enduction allongée, qui est conçue pour enduire le matériau de construction distribué en provenance du récipient (32), afin de niveler et/ou de compacter le matériau de construction distribué, par exemple l'au moins une surface d'enduction allongée pouvant être essuyée par l'élément d'essuyage (52) et/ou par exemple l'élément d'essuyage (52) ayant une extension dans une direction de largeur s'étendant transversalement par rapport à la direction longitudinale de la surface d'enduction, qui est supérieure ou égale à celle de la surface d'enduction allongée, par exemple supérieure ou égale à celle de la zone de distribution (36).

9. Imprimante 3D (10) selon l'une des revendications précédentes, le dispositif de nettoyage d'applicateur (50) comprenant une pluralité d'éléments d'essuyage (52) qui peuvent être déplacés, par exemple conjointement dans une position abaissée afin d'éviter une collision avec l'applicateur (30).

10. Imprimante 3D (10) selon l'une des revendications précédentes, comprenant en outre un capteur (170), qui est conçu pour détecter une position de l'élément d'essuyage (52), et/ou un capteur (82) qui est conçu pour détecter un remplissage du bain de nettoyage (72).

11. Imprimante 3D (10) selon l'une des revendications précédentes, comprenant en outre un dispositif d'impression avec une tête d'impression pour la solidification sélective d'une partie d'une couche de matériau de construction appliqué par l'applicateur et/ou pour l'impression sélective d'une couche de matériau de construction appliquée au moyen de l'applicateur avec un produit de traitement.

12. Procédé de nettoyage d'un applicateur (30) d'une imprimante 3D (10), l'applicateur (30) comprenant un récipient (32), qui définit une cavité interne (34) pour le logement d'un matériau de construction particulaire et qui comprend une zone de distribution (36) pour la distribution du matériau de construction particulaire, comprenant :
le déplacement de l'applicateur (30) vers une position de nettoyage, dans laquelle l'applicateur (30) est disposé au-dessus d'un dispositif de nettoyage d'applicateur (50) qui comprend un élément d'essuyage (52), qui est constitué d'un matériau absorbant, qui est conçu pour absorber un produit de nettoyage liquide et
l'essuyage de la zone de distribution (36) avec l'élément d'essuyage (52) dans un état dans lequel l'élément d'essuyage (52) est humidifié avec un produit de nettoyage liquide.

13. Procédé de nettoyage d'un applicateur (30) d'une imprimante 3D (10) selon la revendication 12, comprenant en outre :
le déplacement de l'élément d'essuyage (52) vers une station de nettoyage (70) et le nettoyage de l'élément d'essuyage (52) et/ou l'infiltration de l'élément d'essuyage (52) avec un produit de nettoyage dans la station de nettoyage (70) et/ou
le déplacement de l'élément d'essuyage (52) vers une station de conditionnement (90) et le réglage d'une quantité de produit de nettoyage qui est absorbée dans l'élément de nettoyage (52), dans la station de conditionnement (90), par exemple après le déplacement de l'élément d'essuyage (52) vers la station de nettoyage (70) et/ou avant l'essuyage de la zone de distribution (36) avec l'élément d'essuyage (52), par exemple en fonction du matériau de construction et/ou du système de liant et/ou du produit de nettoyage utilisé, par exemple afin de réduire la quantité de produit de nettoyage, par exemple par expulsion du produit de nettoyage hors de l'élément d'essuyage (52) par entraînement/évacuation du produit de nettoyage dans un flux de fluide et/ou par expulsion thermique du produit de nettoyage et/ou par expulsion mécanique du produit de nettoyage et/ou
la détermination d'une quantité de produit de nettoyage qui est absorbé dans l'élément d'essuyage (52), par exemple à l'aide d'un capteur (112), par exemple après le déplacement de l'élément d'essuyage (52) vers la station de nettoyage (70) et/ou avant l'essuyage de la zone de distribution (36) avec l'élément d'essuyage (52) et/ou
le déplacement de l'élément d'essuyage (52) vers une position abaissée, afin d'éviter une collision avec l'applicateur (30), après l'essuyage de la zone de distribution (36) avec l'élément d'essuyage (52) et/ou
remplacement de l'élément d'essuyage (52) par un autre élément d'essuyage (52), après l'usure de l'élément d'essuyage (52) ou pour l'adaptation à un matériau de construction et/ou un système de liant et/ou un produit de nettoyage utilisé.

14. Procédé de nettoyage d'un applicateur (30) d'une imprimante 3D (10) selon la revendication 12 ou 13,
la zone de distribution (36) présentant une forme allongée et l'essuyage de la zone de distribution (36) ayant lieu avec l'élément d'essuyage (52) globalement dans la direction longitudinale de la zone de distribution (36) et/ou
le déplacement de l'élément d'essuyage (52) ayant lieu sur une trajectoire courbe et/ou
le procédé de nettoyage de l'applicateur (30) se déroule de manière assistée par un logiciel.
